# EUROPEAN PATENT APPLICATION

(11) **EP 4 629 570 A1**
(43) Date of publication of application: **08.10.2025**
(21) Application number: 22966723.3
(22) Date of filing: 28.11.2022
(51) Int. Cl.: H04L 27/00

(54) **COMMUNICATION METHOD AND APPARATUS, DEVICE, STORAGE MEDIUM, CHIP, PRODUCT, AND PROGRAM**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Penza, Giancarlo
(86) International application number: PCT/CN2022/134809
(87) International publication number: WO 2024/113119

(57) **Abstract**

Embodiments of the present application provide a communication method and apparatus, a device, a storage medium, a chip, a product, and a program. The method comprises: a first device sends first information to a first communication node, wherein the first information comprises: first identification information and/or first related information.

## Description

### TECHNICAL FIELD

Embodiments of the disclosure relate to the field of communication technologies, and particularly to a communication method, an apparatus, a device, a storage medium, a chip, a product and a program.

### BACKGROUND

An Internet of Things (IoT) device has a short communication distance, and IoT devices within a wide range cannot be managed.

### SUMMARY

Embodiments of the disclosure provide a communication method, an apparatus, a device, a storage medium, a chip, a product and a program.

In a first aspect, a communication method provided in an embodiment of the disclosure includes the following operation.

A first device transmits first information to a first communication node. The first information includes first identification information and/or first correlation information.

In a second aspect, a communication method provided in an embodiment of the disclosure includes the following operation.

A first communication node receives first information transmitted by a first device. The first information includes first identification information and/or first correlation information.

In a third aspect, a communication method provided in an embodiment of the disclosure includes the following operation.

A second communication node receives first information or second information transmitted by a first communication node. The second information is determined according to the first information, and the first information includes first identification information and/or first correlation information.

In a fourth aspect, a communication apparatus provided in an embodiment of the disclosure includes a communication unit.

The communication unit is configured to transmit first information to a first communication node. The first information includes first identification information and/or first correlation information.

In a fifth aspect, a communication apparatus provided in an embodiment of the disclosure includes a communication unit.

The communication unit is configured to receive first information transmitted by a first device. The first information includes first identification information and/or first correlation information.

In a sixth aspect, a communication apparatus provided in an embodiment of the disclosure includes a communication unit.

The communication unit is configured to receive first information or second information transmitted by a first communication node. The second information is determined according to the first information, and the first information includes first identification information and/or first correlation information.

In a seventh aspect, a first device provided in an embodiment of the disclosure includes a processor and a memory.

The memory is configured to store a computer program executable on the processor.

The processor is configured to perform the method of the first aspect in conjunction with a transceiver when executing the computer program.

In an eighth aspect, a first communication node provided in an embodiment of the disclosure includes a processor and a memory.

The memory is configured to store a computer program executable on the processor.

The processor is configured to perform the method of the second aspect in conjunction with a transceiver when executing the computer program.

In a ninth aspect, a first communication node provided in an embodiment of the disclosure includes a processor and a memory.

The memory is configured to store a computer program executable on the processor.

The processor is configured to perform the method of the third aspect in conjunction with a transceiver when executing the computer program.

In a tenth aspect, a computer storage medium provided in an embodiment of the disclosure stores one or more programs executable by one or more processors to perform the method in the first aspect, in the second aspect or in the third aspect.

In an eleventh aspect, a chip provided in an embodiment of the disclosure includes a processor for calling a computer program from a memory and running the computer program to perform the method in the first aspect, in the second aspect or in the third aspect.

In a twelfth aspect, a computer program product provided in an embodiment of the disclosure includes a computer storage medium storing a computer program. The computer program includes instructions executable by at least one processor that, when executed by the at least one processor, perform the method in the first aspect, in the second aspect or in the third aspect.

In a thirteenth aspect, a computer program provided in an embodiment of the disclosure causes a computer to perform the method in the first aspect, in the second aspect or in the third aspect.

In the embodiment of the disclosure, the first device transmits first information to the first communication node. The first information includes first identification information and/or first correlation information. In this way, the first device can transmit the first identification information and/or the first correlation information to the first communication node. In this way, the first communication node can obtain identification information and/or correlation information transmitted by each of multiple devices that may include the first device, so as to facilitate the management of electronic tags within a wide range.

### BRIEF DESCRIPTION OF THE DRAWINGS

The accompanying drawings, which are illustrated herein, provide a further understanding of the disclosure and constitute a part of this disclosure. The exemplary embodiments of the disclosure and their description are used to explain the disclosure and not to unduly limit the disclosure. In the drawings:
FIG. 1 is a schematic diagram of an application scenario according to an embodiment of the disclosure.
FIG. 2 is a schematic diagram of a communication method provided in an embodiment of the disclosure.
FIG. 3 is a schematic flowchart of another communication method provided in an embodiment of the disclosure.
FIG. 4 is a schematic flowchart of yet another communication method provided in an embodiment of the disclosure.
FIG. 5 is a schematic flowchart of still another communication method provided by an embodiment of the disclosure.
FIG. 6 is a schematic flowchart of a communication method provided in another embodiment of the disclosure.
FIG. 7 is a schematic flowchart of a communication method provided in yet another embodiment of the disclosure.
FIG. 8 is a schematic flowchart of a communication method provided in still another embodiment of the disclosure.
FIG. 9 is a schematic flowchart of another communication method provided in another embodiment of the disclosure.
FIG. 10 is a schematic flowchart of yet another communication method provided in another embodiment of the disclosure.
FIG. 11 is a schematic flowchart of still another communication method provided in another embodiment of the disclosure.
FIG. 12 is a schematic flowchart of another communication method provided in yet another embodiment of the disclosure.
FIG. 13 is a schematic flowchart of yet another communication method provided in yet another embodiment of the disclosure.
FIG. 14 is a schematic structural diagram of a communication apparatus provided in an embodiment of the disclosure.
FIG. 15 is a schematic structural diagram of a communication apparatus provided in an embodiment of the disclosure.
FIG. 16 is a schematic structural diagram of a communication apparatus provided in an embodiment of the disclosure.
FIG. 17 is a schematic structural diagram of a communication device provided in an embodiment of the disclosure.
FIG. 18 is a schematic structural diagram of a chip according to an embodiment of the disclosure.

### DETAILED DESCRIPTION

The technical solutions in the embodiments of the disclosure would be described below with reference to the accompanying drawings in the embodiments of the disclosure. It is apparent that the described embodiments are a part of the embodiments of the disclosure, rather than all of the embodiments. Based on the embodiments of the disclosure, all other embodiments obtained by those of ordinary skill in the art without creative effort fall within the scope of protection of the disclosure.

The technical solutions described in embodiments of the disclosure may be combined in various ways without conflict. In the description of the disclosure, "a plurality of/multiple" means two or more unless otherwise explicitly and specifically defined.

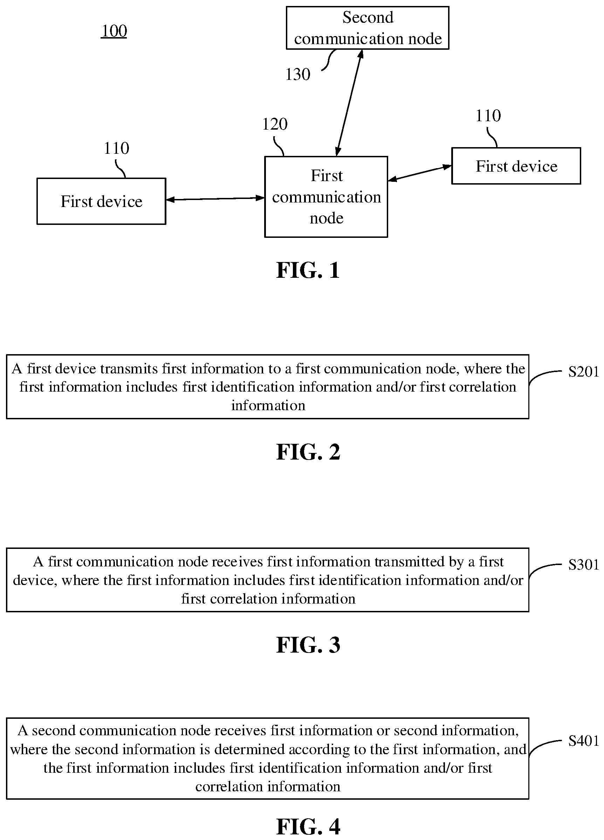

FIG. 1 is a schematic diagram of an application scenario according to an embodiment of the disclosure. As illustrated in FIG. 1, the communication system 100 may include a first device 110, a first communication node 120 and a second communication node 130. The first device 110 may communicatively connect with the first communication node 120, and the first communication node 120 may communicatively connect with the second communication node 130. Multi-service transmissions are supported between the first device 110 and the first communication node 120, and multi-service transmissions are supported between the first communication node 120 and the second communication node 130.

It should be understood that the embodiments of the present disclosure are described only using the communication system 100 as an example, and the embodiments of the present disclosure are not limited thereto. That is, the technical solutions in the embodiments of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, a LTE-based access to unlicensed spectrum (LTE-U) system, a NR-based access to unlicensed spectrum (NR-U) system, a Universal Mobile Telecommunications System (UMTS), a Wireless Local Area Network (WLAN), a Wireless Fidelity (WiFi), an LTE Time Division Duplex (TDD), a Universal Mobile Telecommunications System (UMTS), an IoT system, a Narrow Band Internet of Things (NB-IoT) system, an enhanced Machine-Type Communications (eMTC) system, or a future communication system (e.g., a sixth generation (6G) communication system, a seventh generation (7G) communication system), or the like.

The first device 110 in the embodiments of the present disclosure may include at least one of or a combination of at least two of: an electronic tag, an IoT device/IoT terminal, or a terminal device.

The first communication node 120 in the embodiments of the present disclosure may include at least one of or a combination of at least two of: a terminal device, an access network device, a user plane network element in a core network device, a control plane network element in the core network device, or the core network device. Optionally, the user plane network element may include a User Plane Function (UPF). Optionally, the control plane network element may include an Access and Mobility Management Function (AMF).

The second communication node 130 in the embodiments of the present disclosure may include at least one of or a combination of at least two of: an Internet of Things Function (IoTF) device/network element, an IoTF module/unit, at least one core network device/network element, an access network device, or a terminal device. Optionally, the IoTF device/network element and the IoTF module/unit may exist separately, or may be integrated into one or more core network devices/network elements.

The first device 110 in the disclosure is a device having a wireless communication function, which may be arranged on land including indoor or outdoor areas, handheld or on-board, or may be arranged on the water (such as on a ship), or may be arranged in the air (such as on an airplane, a balloon, or a satellite). The terminal device in the disclosure may be referred to as User Equipment (UE), a Mobile Station (MS), a Mobile Terminal (MT), a user unit, a user station, a mobile station, a remote station, a remote terminal, a mobile device, a user terminal, a terminal, a wireless communication device, a user agent or a user apparatus. The terminal device may include one or a combination of at least two of the following: a satellite terminal, a Wireless Local Loop (WLL) station, a Personal Digital Processing (PDA) device, a handheld device having a wireless communication function, a computing device or other processing devices connected to a wireless modem, a server, a mobile phone, a tablet computer (or Pad), a computer with wireless transceiver function, a handheld computer, a desktop computer, a PDA, a portable media player, a smart speaker, a navigation apparatus, a wearable device (such as a smart watch, a smart glass, or a smart necklace), a pedometer, a digital TV, a Virtual Reality (VR) terminal device, an Augmented Reality (AR) terminal device, a wireless terminal in industrial control, a wireless terminal in automated driving, a wireless terminal in remote medical surgery, a wireless terminal in a smart grid, a wireless terminal in transportation safety, a wireless terminal in a smart city, a wireless terminal in a smart attribution, and a vehicle, an on-board device, an on-board module, a wireless modem, a handheld device, a Customer Premise Equipment (CPE), a smart attribution appliance or the like in a vehicle to everything (V2X) system.

Optionally, the terminal device may be any terminal device, which includes but is not limited to a terminal device in wired or wireless connection with the network device 120 or other terminal devices.

Optionally, the terminal device may be used for a device to device (D2D) communication.

The access network device may include one or a combination of at least two of the following: an Evolutional Node B (eNB or eNodeB) in the LTE system, a Next Generation Radio Access Network (NG RAN) device, a base station (gNB) in the NR system, a small station, a micro station, a radio controller in a Cloud Radio Access Network (CRAN), an access point of the Wi-Fi, a transmission reception point (TRP), a relay station, an access points, an on-board device, a wearable device, a hub, a switch, a bridge, a router, a network device in a future evolved Public Land Mobile Network (PLMN), or the like.

The core network device may be a 5G core (5GC) device. The core network device 122 may include one or a combination of at least two of the following: an AMF, an Authentication Server Function (AUSF), a UPF, a Session Management Function (SMF), a Location Management Function (LMF), a Policy Control Function (PCF), a Network Exposure Function (NEF) and a Network Data Analytics Function (NWDAF). In other embodiments, the core network device may also be an Evolved Data packet Core (EPC) device in the LTE network, for example, a Session Management Function + Core Data packet Gateway (SMF+PGW-C) device. It should be understood that the SMF+PGW-C can achieve functions that can be achieved by the SMF and the PGW-C. In the process of the network evolution, the core network device 122 may also be referred to as other names, or may be a new network entity formed by dividing the functions of the core network, which would not be limited in the embodiments of the present disclosure. In other embodiments, the core network device may be a 6G or 7G core network device.

Connections can be established between various functional units in the communication system 100 through Next Generation (NG) interfaces for performing communication.

For example, the terminal device establishes an air interface connection with the access network device through an NR interface for transmission of user plane data and control plane signaling. The terminal device may establish a control plane signaling connection with the AMF through an NG interface 1 (N1 for short). The access network device, such as a next generation radio access base station (gNB), may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with a data network through an NG interface 6 (N6 for short). The AMF may establish a control plane signaling connection with the SMF through an NG interface 11 (N11 for short). The SMF may establish a control plane signaling connection with the PCF through an NG interface 7 (N7 for short).

FIG. 1 exemplarily illustrates one first communication node, one second communication node and two first devices. Optionally, the wireless communication system 100 may include multiple first communication nodes and/or multiple second communication nodes, and the respective number of first devices may be included within the coverage area of each of the first communication nodes, which would not be limited in embodiments of the present disclosure.

It should be noted that FIG. 1 only illustrates, by way of an example, the system to which the present disclosure is applied. Of course, the methods illustrated in the embodiments of the present disclosure may also be applied to other systems. In addition, the terms "system" and "network" in the present disclosure may usually be used interchangeably. In the disclosure, the term "and/or" refers to only an association relationship for describing associated objects and represents that three relationships may exist. For example, A and/or B may represent three cases: i.e., only A exists, both A and B exist, and only B exists. Furthermore, character "/" in the disclosure usually represents that previous and next associated objects form an "or" relationship. It should also be understood that the term "indication/indicate/indicating" mentioned in the embodiments of the disclosure may be a direct indication, or may be an indirect indication, or may represent existence of an association relationship. For example, A indicates B, which may represent that A directly indicates B, for example, B may be obtained by A; or may represent that A indirectly indicates B, for example, A indicates C, and B may be obtained by C; or may represent that an association relationship exists between A and B. It should also be understood that the term "corresponding/correspondence/correspond" mentioned in the embodiments of the present disclosure may indicate that there are direct or indirect correspondences between two objects, or may indicate that there is an association relationship between the two objects, or may have an indicating and being indicated relationship, a configuring and being configured relationship, or the like. It should also be understood that the terms "predefined/predefinition", "predefined by a protocol", "pre-determined/predetermination" or "predefined rules" mentioned in the embodiments of the present disclosure may be implemented by pre-storing corresponding codes or tables or by other means that may be used to indicate correlation information in devices (e.g., including terminal devices and network devices), specific implementations of which are not limited herein. For example, the "predefined" may refer to what is defined in protocol. It should also be understood that, in the embodiments of the present disclosure, the "protocol" may refer to standard protocols in the communication field, and may include, for example, an LTE protocol, an NR protocol and related protocols applied in future communication systems, which are not limited in the present disclosure.

For convenience of understanding of the technical solutions of the embodiments of the disclosure, related technologies in the embodiments of the disclosure are described. The following related technologies may be used as alternative solutions and may be combined with the technical solutions of the embodiments of the disclosure in various ways, all of which belong to the scope of protection of the embodiments of the disclosure.

Radio Frequency Identification (RFID) is a non-contact automatic identification technology that obtains relevant data of objects through the wireless radio frequency and identifies the objects. The RFID can identify objects that move in high-speed, identify multiple targets at the same time, realize remote reading, and work in various harsh environments. In the IoT, people and things can "communicate", and things and things can "communicate", and the essence of the "communicate" is to use RFID technology. A RFID system is just like tentacles of the IoT, which makes it possible to automatically identify every object in the IoT, and thus the RFID system is a basis for building the IoT.

The RFID system may consist of an electronic tag, a reader/writer and a data management system. The electronic tag is a data carrier of the RFID system, which is mainly composed of a chip and an antenna. The electronic tag is usually attached to the object to identify the target object. Each electronic tag has a unique electronic code which stores related information of the identified object. The reader/writer reads electronic tag information through the RFID technology. The reader/writer generally consists of a radio frequency unit, a control unit and an antenna. A data management system manages the reader/writer. The data management system usually sends a command to the reader/writer through a certain interface, and reads or rewrites data information in the electronic tag and updates the database information through the reader/writer.

Both the electronic tag and the reader/writer are equipped with antennas. The main function of the antenna in the electronic tag is to receive electromagnetic signal transmitted by the reader/writer or send data required by the reader/writer back to the reader/writer. The function of the antenna in the reader/writer is emitting electromagnetic energy to activate the electronic tag, and sending an instruction to the electronic tag and receiving information from the electronic tag at the same time.

The RFID technology has at least one of characteristics as follows.

Both the RFID technology and the barcode identification technology are automatic identification technologies. Compared with the barcode identification technology, the RFID technology can achieve communication in longer distance, and is more convenient.

The RFID technology has a characteristic of non-contact, thus a manual intervention is not required when performing identification work. Data can be read by penetrating through external materials, a service life is long, and the RFID technology can work in harsh environments.

Tags can be easily embedded or attached to products with different shapes or types, the reading distance is longer, data can be wrote and accessed, and less time is taken for writing than printing the barcode.

The content of the tag can be dynamically changed, multiple tags can be processed at the same time, and the access of the tag data is protected by a password, which has a higher security.

The identification speed can reach tens of microseconds in some occasions, which can realize multi-target identification and motion identification, and track and locate an object attached with a RFID tag.

The data information reading range of the RFID can be increased to varying degrees according to the antenna and a power of the reader/writer, so that the data reading within ten meters can be realized, which has an advantage in terms of the identification range compared with traditional identification technologies.

The RFID technology has characteristics such as strong environmental adaptability, strong anti-interference ability, high temperature resistance, waterproof, oil stain resistance and chemical acid and alkali corrosion resistance.

The RFID has become the main automatic identification technology in the IoT because of its advantages such as barrier-free reading and long-distance penetration, fast scanning, high storage capacity, anti-pollution ability, reusability, and good security and confidentiality.

The RFID has short distance, small coverage, low compatibility, and the like. In contrast, the wireless spectrum and wireless signal design in 3GPP is helpful to achieve more efficient ultra-low power or zero power IoT device communications. Furthermore, the 3GPP network has advantages of wide coverage and capability exposure, which can be widely extended to different third parties to realize the interconnection and interoperability of IoT devices.

For convenience of understanding of the technical solutions of the embodiments of the disclosure, the technical solutions of the disclosure will be described in detail below with reference to specific embodiments. The above related technologies may be used as alternative solutions and may be combined with the technical solutions of the embodiments of the disclosure in various ways, all of which belong to the scope of protection of the embodiments of the disclosure. The embodiments of the disclosure include at least some of the following.

FIG. 2 is a schematic diagram of a communication method provided in an embodiment of the disclosure. As shown in FIG. 2, the method includes following operation S201.

At the operation S201, a first device transmits first information to a first communication node. The first information includes first identification information and/or first correlation information.

Optionally, the first communication node may include one of the following: a terminal device, an access network device or a core network device.

Optionally, the first device may transmit the first information to the first communication node every other first duration. Optionally, the first duration may be determined by the first device according to pre-configuration information. Alternatively, the first duration may be transmitted by the first communication node to the first device. Alternatively, the first duration may be defined by a protocol.

Optionally, the first device may receive a request (e.g., a second request described below) transmitted by the first communication node, and transmit the first information to the first communication node according to the request.

Optionally, in any of the embodiments of the disclosure, the first information may be referred to as current information.

Optionally, the first device may obtain the first information, and transmit the first information in a case where the first information is different from the last transmitted third information and/or an amount of change between the first information and the third information exceeds or reaches a first threshold.

Optionally, the type and/or content of the first information may be determined by the first device according to the pre-configuration, or may be indicated by the first communication node to the first device, or may be defined by a protocol. For example, the first communication node may transmit first indication information to the first device, and the first device may transmit the first information once according to the first indication information. Then, the first communication node may subsequently transmit the first indication information to the first device, and the first device may transmit the first information once again according to the first indication information. In this way, the content of the first information transmitted by the first device each time is determined according to the first indication information transmitted by the first communication node each time. For another example, the first communication node may transmit second indication information to the first device, and the first device may transmit, according to the second indication information, first information indicated based on the second indication information to the first communication node from a time when the second indication information is received. In this way, by transmitting the second indication information once, the first communication node can enable the first information subsequently transmitted by the first device every time to be determined according to the indication of the second indication information.

Optionally, the first indication information and/or the second indication information include at least one of the following: indication information indicating a type and/or a content of information to be transmitted.

Optionally, the first identification information may include at least one of: first specific identification information of the first device, identification information of a specific communication node that communicates with the first device, identification information of a target communication node for maintaining and/or storing at least part of the first information, attribution identification information corresponding to the first device, geographic identification information of the first device, service identification information of the first device, or service type identification information of the first device. Optionally, the identification information of the specific communication node that communicates with the first device may include identification information of the first communication node. Optionally, the identification information of the target communication node for maintaining and/or storing at least part of the first information may include identification information of the second communication node. For example, the first identification information may include at least one of: first specific identification information of the first device, identification information of the first communication node, or identification information of the second communication node.

Optionally, in any of the embodiments of the disclosure, the first specific identification information of the first device may include all identifiers capable of identifying the first device. Optionally, in any of the embodiments of the disclosure, the first specific identification information of the first device may include at least one of the following: first labeling information of the first device, a first Electronic Product Code (EPC) of the first device, first communication identification information of the first device, or first network identification information of the first device.

Optionally, in any of the embodiments of the disclosure, the first labeling information of the first device may be any information capable of identifying or labeling the first device. For example, optionally, the first labeling information of the first device may include fixed identification information of the first device and/or variable identification information of the first device. The fixed identification information of the first device represents that the identification information is unchangeable information. The variable identification information of the first device represents that the identification information is variable information. For example, the variable identification information of the first device may be updated by itself (e.g., updated periodically or aperiodically), or updated according to indications of the first communication node and/or the second communication node. Optionally, the first labeling information of the first device may include first device identification information or first physical identification information of the first device. Optionally, the first device identification information of the first device may be fixed identification information or variable identification information.

Optionally, in any of the embodiments of the disclosure, the target communication node may include part or all of the communication nodes that can be used for maintaining and/or storing at least part of the first information. Optionally, in any of the embodiments of the disclosure, the specific communication node may include part or all of the communication nodes that can communicate with the first device.

Optionally, in any of the embodiments of the disclosure, the target communication node includes one or more communication nodes, and/or the target communication node includes the second communication node. Optionally, in any of the embodiments of the disclosure, the specific communication node includes one or more communication nodes, and/or the specific communication node includes the first communication node.

Optionally, the first correlation information may include any information correlated to the first device.

Optionally, the first device may transmit a first data packet to the first communication node, where the first data packet carries the first information. Optionally, the first identification information may be included in a packet header of the first data packet, or the first identification information may be included in a payload of the data packet, or a part of the first identification information may be included in the packet header of the first data packet and another part of the first identification information may be included in the payload of the first data packet. Optionally, the first correlation information may be included in the packet header of the first data packet, or the first correlation information may be included in the payload of the data packet, or a part of the first correlation information may be included in the packet header of the first data packet and another part of the first correlation information may be included in the payload of the first data packet.

FIG. 3 is a schematic flowchart of another communication method provided in an embodiment of the disclosure. As shown in FIG. 3, the method includes following operation S301.

At the operation S301, a first communication node receives first information transmitted by a first device. The first information includes first identification information and/or first correlation information.

Optionally, the first communication node may start monitoring the first information transmitted by the first communication node every other second duration, and an duration of each monitoring may be a third duration. Optionally, the second duration and/or the third duration may be determined by the first communication node according to pre-configuration information, or may be transmitted by another communication node to the first communication node, or may be defined by a protocol.

Optionally, the first communication node may indicate a type and/or a content of the first information to the first device. Optionally, the first communication node may periodically or aperiodically indicate the type and/or the content of the first information to the first device. Optionally, the first communication node may indicate the type and/or the content of the first information to the first device in a case where the first communication node needs the first device to transmit the first information. Optionally, when the type and/or the content of the first information changes, the first communication node may indicate a changed type and/or a changed content to the first device. In this way, in a case where the type and/or the content of the first information changes, the first communication node will indicate the changed type and/or the changed content to the first device.

Optionally, the first communication node may transmit the first information or second information. The second information is determined according to the first information. Optionally, the operation that the first communication node transmits the first information or the second information may include: the first communication node transmits the first information or the second information to the second communication node.

Optionally, the first communication node may maintain and/or store the first information or the second information.

Optionally, at least part of the second information may be determined according to at least part of the first information.

Optionally, the first information and the second information may be partially identical, or completely different. Optionally, the first communication node may determine a part of the second information according to a part of the first information, and determine another part of the first information and the part of the second information as the second information.

For example, the first information includes relative location information between the first device and the first communication node. The first communication node may determine absolute location information of the first device according to its own location information and the relative location information. The first communication node may replace the relative location information in the first information with the absolute location information of the first device to obtain the second information, or add the absolute location information of the first device into the first information to obtain the second information. In this way, the second information may include the absolute location information of the first device.

Optionally, the second communication node may be selected from the target communication nodes included in the first information by the first communication node, or may be determined according to one second communication node indicated in the first information, or may be determined according to a pre-configuration in the first communication node, or may be determined according to at least part of the first information. For example, the first communication node may determine the second communication node according to the attribution identification information corresponding to the first device in the first information.

Optionally, the first communication node may transmit a second data packet to the second communication node, where the second data packet may carry the first information or the second information. Optionally, the second information may include first identification information and/or first correlation information. Optionally, the first identification information in the first information and the first identification information in the second information may be identical, different, or partially identical. Optionally, the first correlation information in the first information and the first correlation information in the second information may be identical, different, or partially identical.

Optionally, the first identification information may be included in a packet header of the second data packet, or the first identification information may be included in a payload of the data packet, or a part of the first identification information may be included in the packet header of the second data packet and another part of the first identification information may be included in the payload of the second data packet. Optionally, the first correlation information may be included in the packet header of the second data packet, or the first correlation information may be included in the payload of the data packet, or a part of the first correlation information may be included in the packet header of the second data packet and another part of the first correlation information may be included in the payload of the second data packet.

FIG. 4 is a schematic flowchart of yet another communication method provided in an embodiment of the disclosure. As shown in FIG. 4, the method includes following operation S401.

At the operation S401, a second communication node receives first information or second information transmitted by a first communication node. The second information is determined according to the first information. The first information includes first identification information and/or first correlation information.

Optionally, the second communication node may store or maintain at least part of the first information or at least part of the second information when receiving the first information or the second information.

Optionally, in some embodiments of the disclosure, the first information may be encrypted information. For example, when the first device obtains information to be transmitted, the first device may encrypt the information to be transmitted to obtain the first information. The information to be transmitted may include the first identification information and/or the first correlation information. Optionally, both the first communication node and the second communication node may decrypt the encrypted first information; or the second communication node can decrypt the first information, but the first communication node cannot decrypt the first information.

Optionally, in other embodiments of the disclosure, the first information may be unencrypted information, and the second information may be encrypted information. For example, when obtaining the first information, the first communication node may encrypt the first information to obtain the second information, or may process at least part of the first information to obtain information to be transmitted and encrypt the information to be transmitted to obtain the second information.

Optionally, in yet other embodiments of the disclosure, both the first information and the second information are unencrypted information.

Optionally, in any of the embodiments of the disclosure, the first identification information includes or indicates at least one of: identification information of a target communication node for maintaining and/or storing at least part of the first information; attribution identification information corresponding to the first device; identification information of a specific communication node that communicates with the first device; first labeling information of the first device; a first EPC of the first device; first communication identification information of the first device; first network identification information of the first device; geographic identification information of the first device; service identification information of the first device; or service type identification information of the first device.

Optionally, the identification information of the target communication node may include identification information of one or more communication nodes. Optionally, at least part of the target communication nodes may be included in the core network device, for example, the second communication node may be included in the core network device. Optionally, the identification information of the target communication node may include identification information of one second communication node stored in the first device, or may include identification information of one second communication node determined by the first device from identification information of multiple second communication nodes, or may include identification information of part or all of communication nodes capable of storing or maintaining at least part of the first information.

Optionally, the first device may pre-store identification information of the target communication node/the second communication node. Optionally, the first communication node may transmit a first request or second reply information to the first device. The first request or the second reply information may carry the identification information of the target communication node/the second communication node, so that the first device may obtain the identification information of the target communication node/the second communication node according to the first request or the second reply information.

Optionally, the attribution identification information corresponding to the first device may include at least one of: service provider identification information corresponding to the first device, operator identification information corresponding to the first device, attribution location identification information corresponding to the first device, device category identification information corresponding to the first device, or the like. For example, the service provider identification information may include identification information corresponding to Tencent, identification information corresponding to Alibaba, identification information corresponding to JD, and the like. For example, the operator identification information may include identification information corresponding to China Mobile, identification information corresponding to China Unicom, and the like. For example, the attribution location identification information corresponding to the first device may include identification information corresponding to mainland China, identification information corresponding to Shaanxi Province, identification information corresponding to Xi'an City, and the like. For example, the device category identification information corresponding to the first device may include identification information of a life service corresponding to the first device or identification information of automated driving corresponding to the first device.

Optionally, the identification information of the specific communication node that communicates with the first device may include identification information of specific communication node(s) that may communicate with the first device. Optionally, the identification information of the specific communication node that communicates with the first device may include identification information of communication node(s) that may communicate directly or indirectly with the first device. Optionally, the specific communication node(s) that may communicate with the first device may include one or more first communication nodes. For example, the specific communication node(s) that may communicate with the first device may include at least one of: a terminal device 1, a terminal device 2, a terminal device 3, an RAN device 1, an RAN device 2, or an AMF network element 1, or the like.

Optionally, in any of the embodiments of the disclosure, the first labeling information of the first device, the first EPC of the first device, the first communication identification information of the first device and the first network identification information of the first device may be referred to as: current labeling information of the first device, a current EPC of the first device, current communication identification information of the first device, and current network identification information of the first device, respectively.

Optionally, the first labeling information of the first device may be information for uniquely identifying the first device, or may be information for uniquely identifying the first device within an operator network and/or a service provider and/or an attribution location. Optionally, the first labeling information of the first device may also be referred to as a first device identifier code, a first device factory code, or the like in other embodiments. The first labeling information of the first device may include at least one of: an identifier code, a device identifier code, a device identification code, a product code, a product barcode, a product QR code, a product image, a product number, or the like.

Optionally, the first communication identification information of the first device may be temporary communication identification information or fixed communication identification information of the first device.

Optionally, the network identification information (the network identification information in any of the embodiments of the disclosure may include the first network identification information and/or the second network identification information) may include at least one of: Bluetooth network identification information, WiFi network identification information, zigbee network identification information, Ultra Wide Band (UWB) network identification information, and cellular network identification information.

Optionally, the geographic identification information of the first device may include at least one of: geographic location identification information of a location where the first device is currently located, geographic location identification information of a factory/warehouse where the first device is located, geographic location identification information of a road on which the first device is located, location information of a house where the first device is located, location information of a residential area where the first device is located, location information of a street where the first device is located, location information of a district/county where the first device is located, location information of a city where the first device is located, or the like.

Optionally, the service identification information of the first device may include at least one of: refrigerator identification information, air conditioner identification information, vehicle identification information, terminal identification information, or the like.

Optionally, the service type identification information of the first device may include at least one of: home appliance labeling information, household use identification information, commercial use identification information, vehicle use identification information, or the like.

Optionally, in any of the embodiments of the disclosure, the first correlation information includes or indicates at least one of: tag information for at least part of the first information; location information of the first device; status information of the first device; time information about when the first device transmits the first information; part or all of information stored in the first device; information determined by the first device according to the information stored in the first device; or a correspondence between at least two pieces of identification information among the first labeling information of the first device, the first EPC of the first device, the first communication identification information of the first device and the first network identification information of the first device.

Optionally, the tag information may be determined by the first device according to at least part of the first information. Optionally, the tag information may be transmitted by the first communication node to the first device. For example, the first communication node determines tag information according to at least part of the first information, transmits the tag information and the at least part of the first information to the first device, so that the first device stores the tag information and the at least part of the first information. Optionally, the tag information may be transmitted by the second communication node to the first device via the first communication node. For example, the second communication node determines the tag information according to the at least part of the first information, and transmits the tag information and the at least part of the first information to the first device via the first communication node, so that the first device stores the tag information and the at least part of the first information.

Optionally, the tag information may include at least one of: image information, file information, operator information of the first device, temperature information, humidity information, remaining battery level information, audio information, or the like.

Optionally, the location information of the first device may include: absolute location information of the first device, relative location information of the first device, location information of an area where the first device is located. Optionally, the relative location information of the first device may include location information of the first device relative to the first communication node.

In any of the embodiments of the disclosure, the location information may include, unless otherwise specified, at least one of the following: absolute location information, relative location information, coordinate information, latitude and longitude information, site information, location identification information, or Global Location Number (GLN).

Optionally, the status information of the first device may include at least one of: the first device is in a warehouse, the first device is on a shelf, the first device is in a display state, whether the first device is being used, temperature information of the first device, speed information of the first device, remaining battery level information of the first device, acceleration information of the first device, or the like.

Optionally, the time information may include timestamp information.

Optionally, the first device may determine, according to the pre-configuration, that the first information includes part or all of the information stored in the first device. Optionally, the first device may determine, according to the second request transmitted by the first communication node, that the first information includes part or all of the information stored in the first device. For example, in a case where the second request includes indication information indicating the type and/or the content of information to be transmitted, the first device may determine that the first information includes part of the information stored in the first device, which corresponds to the type and/or the content of the information to be transmitted. For another example, in a case where the second request does not include indication information indicating a type and/or a content of information to be transmitted, the first device may determine that the first information includes all of the information stored in the first device. Further, the first communication node may determine the part of the information according to the type and/or the content of the information to be transmitted, and transmit the part of the information to the second communication node, or the first communication node may transmit all of the information to the second communication node.

Optionally, the stored information may include part or all of the stored information. Optionally, the information determined according to the stored information may include: information obtained by encrypting the stored information, information obtained by modifying the stored information, or information obtained by processing or performing calculation on the stored information. Exemplarily, the stored information may include identification information of the first communication node, and the first device may communicate with the first communication node according to the identification information of the first communication node, thereby obtaining location information of the first device relative to the first communication node.

Optionally, in some examples, the first correlation information includes a correspondence between the first labeling information of the first device and the first EPC of the first device. Optionally, in other examples, the first correlation information includes a correspondence among the first labeling information of the first device, the first EPC of the first device, and the first communication identification information of the first device. The content of the correspondence included in the first correlation information is not limited in the embodiments of the disclosure.

Optionally, the correspondence between any two pieces of identification information among the first labeling information of the first device, the first EPC of the first device, the first communication identification information of the first device and the first network identification information of the first device may be a one-to-many correspondence, or a one-to-one correspondence, or a many-to-one correspondence. For example, one piece of first labeling information of the first device may correspond to multiple first EPCs of multiple first devices, or one piece of first labeling information of the first device may correspond to one first EPC of one first device, or first labeling information of multiple first devices may correspond to one first EPC of one first device.

Optionally, in any of the embodiments of the disclosure, the at least part of the first information and/or the tag information in the first information may be generated by the first device itself, and/or may be configured by the first communication node to the first device, or may be configured by the second communication node to the first device via the first communication node.

It should be noted that at least part of the first information in any part of the disclosure may be at least one piece of the information included in the first information listed above, which is not listed item by item in the embodiments of the disclosure. It should be noted that, in any of the embodiments of the disclosure, at least part of the information in the first information at different places may be identical or different.

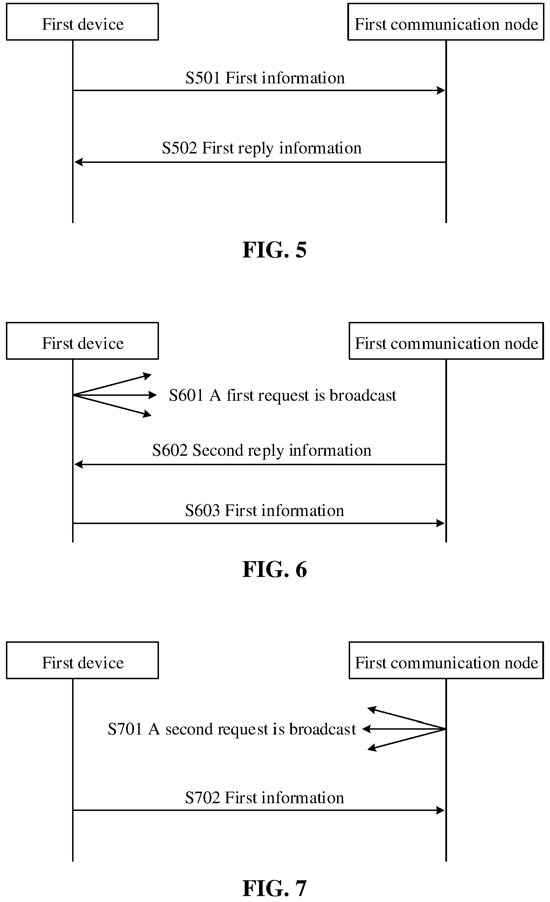

FIG. 5 is a schematic flowchart of still another communication method provided by an embodiment of the disclosure. As shown in FIG. 5, the method includes following operations S501 and S502.

At the operation S501, a first device transmits first information to a first communication node, and the first communication node receives the first information transmitted by the first device. The first information includes first identification information and/or first correlation information.

At the operation S502, the first communication node transmits first reply information to the first device, and the first device receives the first reply information transmitted by the first communication node.

Optionally, the first reply information may be used to indicate that the first communication node has received or not received the first information.

Optionally, the first reply information includes at least one of: indication information indicating a successful reception; indication information indicating an unsuccessful reception; acknowledgement (ACK); non-acknowledgement (NACK); second labeling information of the first device; a second EPC of the first device; second communication identification information of the first device; second network identification information of the first device; identification information of the first communication node; identification information of a target communication node for maintaining and/or storing at least part of the first information; or indication information indicating a type and/or a content of information to be transmitted.

Optionally, at least one of the second labeling information of the first device, the second EPC of the first device, the second communication identification information of the first device, or the second network identification information of the first device may be generated by the first communication node, or may be received by the first communication node from the second communication node.

Optionally, the second labeling information of the first device may be identical to or different from the first labeling information of the first device. Optionally, the second EPC of the first device may be identical to or different from the first EPC of the first device. Optionally, the second communication identification information of the first device may be identical to or different from the first communication identification information of the first device. Optionally, the second network identification information of the first device may be identical to or different from the first network identification information of the first device.

Optionally, when the first device obtains at least one of the second labeling information of the first device, the second EPC of the first device, the second communication identification information of the first device, or the second network identification information of the first device, the at least one of the second labeling information of the first device, the second EPC of the first device, the second communication identification information of the first device, or the second network identification information of the first device is set as at least one of current labeling information of the first device, current EPC of the first device, current communication identification information of the first device, or current network identification information of the first device. In this way, the first device may subsequently communicate with the first communication node through the at least one of the second labeling information of the first device, the second EPC of the first device, the second communication identification information of the first device, or the second network identification information of the first device; or include the at least one of the second labeling information of the first device, the second EPC of the first device, the second communication identification information of the first device or the second network identification information of the first device, into the subsequently transmitted first information.

Optionally, in other embodiments, the second labeling information of the first device, the second EPC of the first device, the second communication identification information of the first device, and the second network identification information of the first device may be new labeling information of the first device, new EPC of the first device, new communication identification information of the first device, and new network identification information of the first device, respectively.

Optionally, the identification information of the first communication node may include at least one of: labeling information of the first communication node, communication identification information of the first communication node, or network identification information of the first communication node.

Optionally, the first reply information may include one or more bits by which the type and/or the content of the information to be transmitted are indicated. Optionally, the first reply information may include a target domain or target field, and the target domain or target field is used to configure the type and/or the content of the information to be transmitted. The type and/or the content of the information to be transmitted are indicated by the target domain or target field.

FIG. 6 is a schematic flowchart of a communication method provided in another embodiment of the disclosure. As shown in FIG. 6, the method includes following operations S601 to S603.

At the operation S601, a first device broadcasts a first request, and a first communication node receives the first request broadcast by the first device. The first request is for requesting to transmit information or for requesting to transmit first information.

Optionally, in other embodiments, the operation S601 may be replaced by: the first device transmits the first request to the first communication node, and the first communication node receives the first request transmitted by the first device. Optionally, in yet other embodiments, the operation S601 may be replaced by: the first device multicasts the first request, and the first communication node receives the first request multicast by the first device.

Optionally, in a case where the first request is for requesting to transmit the information, the first request may not include or indicate the content of the information to be transmitted, but only notify the external that the first device needs to transmit information, so that a communication node (e.g., the first communication node) that can transmit information notifies the first device to transmit information. Optionally, in a case where the first request is for requesting to transmit the first information, the first request may include part or all of the content of the first information. Exemplarily, the first request may include the first identification information and/or the first correlation information. Still exemplarily, the first request may include identification information of the target communication node.

Optionally, the first request may include one or more bits indicating: requesting to transmit the information or requesting to transmit the first information.

Optionally, the first request includes at least one of: first labeling information of the first device; a first EPC of the first device; first communication identification information of the first device; first network identification information of the first device; indication information indicating a type and/or a content of the first information; or indication information that indicates acquisition of or search for a specific communication node to which information is to be transmitted.

At the operation S602, the first communication node transmits second reply information to the first device, and the first device receives the second reply information transmitted by the first communication node.

Optionally, the second reply information may be used to indicate that the first communication node can be used for transmission of information transmitted by the first device.

Optionally, the second reply information includes at least one of: indication information indicating a successful reception; indication information indicating an unsuccessful reception; ACK; NACK; second labeling information of the first device; a second EPC of the first device; second communication identification information of the first device; second network identification information of the first device; identification information of the first communication node; identification information of a target communication node for maintaining and/or storing at least part of the first information; or indication information indicating a type and/or a content of information to be transmitted.

Optionally, the second reply information may include one or more bits by which the type and/or the content of the information to be transmitted are indicated. Optionally, the second reply information may include a target domain or target field. The target domain or target field is used to configure the type and/or the content of the information to be transmitted, and the type and/or the content of the information to be transmitted are indicated by the target domain or target field.

At the operation S603, the first device transmits first information to the first communication node, and the first communication node receives the first information transmitted by the first device. The first information includes first identification information and/or first correlation information.

Optionally, in other embodiments, after the operation S603, the following operations may be further included: the first communication node transmits first reply information to the first device; and the first device receives the first reply information transmitted by the first communication node.

Optionally, the contents included in the first reply information and the second reply information may be identical or different, or may be partially identical. Exemplarily, the first reply information includes indication information indicating a successful reception or indication information indicating an unsuccessful reception, and the second reply information includes second labeling information of the first device. Also exemplarily, the first reply information and the second reply information include identification information of the first communication node.

FIG. 7 is a schematic flowchart of a communication method provided in yet another embodiment of the disclosure. As shown in FIG. 7, the method includes following operations S701 and S702.

At the operation S701, a first communication node broadcasts a second request, and a first device receives the second request broadcast by the first communication node. The second request is for requesting transmission of information or for requesting transmission of first information.

Optionally, in other embodiments, the operation S701 may be replaced by: the first communication node transmits a second request to the first device, and the first device receives the second request transmitted by the first communication node. Optionally, in yet other embodiments, the operation S701 may be replaced by: the first communication node multicasts a second request, and the first device receives the second request multicast by the first communication node.

Optionally, in a case where the second request is for requesting transmission of information, the second request may not include or indicate the content of the information to be transmitted, but only notify the external that the first communication node can transmit information, so that the first device transmits the first information to the first communication node when obtaining the first information. Optionally, when the second request is for requesting transmission of the first information, the second request may include indication information indicating the transmission of the first information. Exemplarily, the second request may include indication information indicating the first identification information and/or the first correlation information. Also exemplarily, the second request may include indication information indicating identification information of the target communication node.

Optionally, the second request may include one or more bits indicating: requesting transmission of information or requesting transmission of first information.

Optionally, the second request includes at least one of: indication information indicating transmission of the information or transmission of the first information; identification information of the first communication node; at least one of following for at least one device: first labeling information, first EPC, first communication identification information, or first network identification information, where the at least one device includes the first device; at least one of following corresponding to the at least one device: a first labeling information range, a first EPC range, a first communication identification information range, or a first network identification information range; or indication information indicating a type and/or a content of information to be transmitted.

At the operation S702, the first device transmits the first information to the first communication node, and the first communication node receives the first information transmitted by the first device. The first information includes first identification information and/or first correlation information.

In other embodiments, after the operation S702, the following operations may be further included: the first communication node transmits first reply information to the first device; and the first device receives the first reply information transmitted by the first communication node.

In some embodiments, the method further includes following operation.

The first device stores part or all of the information in the first reply information or the second reply information.

In this way, when receiving the first reply information or the second reply information, the first device may store part or all of the information in the first reply information or the second reply information. Exemplarily, part or all of the information in the first reply information or the second reply information may be part or all of the information included in the first reply information or the second reply information listed above, which is not listed item by item herein. Exemplarily, in a case where the first reply information or the second reply information includes the second labeling information of the first device, the first device may store the second labeling information of the first device. Optionally, the first device may or may not delete the first labeling information of the first device in a case where the second labeling information of the first device is stored.

In some embodiments, the operation that the first device transmits the first information to the first communication node includes: the first device periodically transmits the first information to the first communication node.

In other embodiments, the operation that the first device transmits the first information to the first communication node includes: the first device transmits the first information to the first communication node in a case where the first information is different from last transmitted third information.

In yet other embodiments, the operation that the first device transmits the first information to the first communication node includes: the first device transmits the first information or the first identification information to the first communication node in a case where the first identification information is different from last transmitted second identification information.

In still other embodiments, the operation that the first device transmits the first information to the first communication node includes: the first device transmits the first information or the first correlation information to the first communication node in a case where the first correlation information is different from last transmitted second correlation information and/or an amount of change between the first correlation information and the last transmitted second correlation information exceeds or reaches a first threshold.

Optionally, there is a specific time before the current time, the current time corresponds to the first information, and the specific time corresponds to the third information. The third information may be current information transmitted by the first device to the first communication node at the specific time, and the first information may be current information transmitted by the first device to the first communication node at the current time.

Optionally, in any of the embodiments of the disclosure, the case where the first information is different from the third information may include that the content included in the first information is different from the content corresponding to the third information. Exemplarily, the first identification information included in the first information is different from the first identification information included in the third information. Also exemplarily, the first labeling information of the first device included in the first information is different from the first labeling information of the first device included in the third information. For example, the first labeling information of the first device included in the first information is 56, and the first labeling information of the first device included in the third information is 67. For another example, the time information about when the first device transmits the first information included in the first information is the current time, and the time information about when the first device transmits the first information included in the third information is the specific time.

### For the first communication node side

In some embodiments, the operation that the first communication node receives the first information transmitted by the first device includes: the first communication node periodically receives the first information.

In other embodiments, the first information is transmitted by the first device in a case where the first information is different from last transmitted third information.

In yet other embodiments, the first information or the first identification information is transmitted by the first device in a case where the first identification information is different from last transmitted second identification information.

In still other embodiments, the first information or the first correlation information is transmitted by the first device in a case where the first correlation information is different from last transmitted second correlation information and/or an amount of change between the first correlation information and the last transmitted second correlation information exceeds or reaches a first threshold.

### For the second communication node side

In some embodiments, the operation that the second communication node receives the first information or the second information transmitted by the first communication node includes: the second communication node periodically receives the first information or the second information transmitted by the first communication node.

In other embodiments, the first information is transmitted by the first device in a case where the first information is different from last transmitted third information.

In yet other embodiments, the first information or the first identification information is transmitted by the first device in a case where the first identification information is different from last transmitted second identification information.

In still other embodiments, the first information or the first correlation information is transmitted by the first device in a case where the first correlation information is different from last transmitted second correlation information and/or an amount of change between the first correlation information and the last transmitted second correlation information exceeds or reaches a first threshold.

In some embodiments, the operation that the first communication node receives the first information transmitted by the first device includes the following operation.

The first communication node receives a first protocol data packet, where the first protocol data packet includes the first information or the second information.

Optionally, the operation that the first communication node receives the first protocol data packet may include: the first communication node receives the first protocol data packet transmitted by the first device. In this case, the first communication node communicates directly with the first device. Optionally, the first protocol may be a protocol corresponding to a communication between the first communication node and the first device.

Optionally, the operation that the first communication node receives the first protocol data packet may include: the first communication node receives the first protocol data packet transmitted by a first intermediate device. The first protocol data packet is generated by the first intermediate device according to the received first information or the received second information transmitted by the first device. Optionally, the first protocol may be a protocol corresponding to a communication between the first communication node and the first intermediate device.

Optionally, the first protocol may be a protocol prior to the disclosure. For example, the first protocol may include one of: a Service Data Adaptation Protocol (SDAP) protocol, an Internet Protocol (IP), a Data packet Data Convergence Protocol (PDCP) protocol, or a Non-Access Stratum (NAS) protocol.

Optionally, the first protocol may be a protocol later than the disclosure. Optionally, the first protocol data packet may include a protocol packet header later than the disclosure and a data payload, or may include a combination of a protocol packet header later than the disclosure and one of the following data packets: an SDAP data packet, an IP data packet, a PDCP data packet, or an NAS data packet.

In some embodiments, the operation that the first communication node transmits the first information or the second information to the second communication node includes: the first communication node transmits a payload container or a second protocol data packet to the second communication node.

### For the second communication node side

In some embodiments, the operation that the second communication node receives the first information or the second information transmitted by the first communication node includes: the second communication node receives a payload container or a second protocol data packet transmitted by the first communication node.

The payload container or the second protocol data packet includes the first information or the second information. The payload of the load container includes the first information or the second information, and readable information of the payload container includes at least part of the first identification information.

Optionally, the second communication node may directly communicate with the first communication node, or indirectly communicate with the first communication node via the second intermediate device.

Optionally, in some embodiments, the payload container may be transmitted by the first communication node to the second communication node through a control plane. Optionally, in other embodiments, the payload container may be transmitted by the first communication node to the second communication node through a user plane.

Optionally, in some embodiments, the second protocol data packet may be transmitted by the first communication node to the second communication node through the user plane. Optionally, in other embodiments, the second protocol data packet may be transmitted by the first communication node to the second communication node through the control plane.

In some embodiments, a packet header of the first protocol data packet and/or the second protocol data packet includes at least part of the first identification information.

In some embodiments, a payload portion of the first protocol data packet and/or the second protocol data packet includes the first information or the second information.

In other embodiments, the payload portion of the first protocol data packet and/or the second protocol data packet includes information other than the at least part of the identifying information in the first information or the second information.

In some embodiments, the second protocol data packet includes an SDAP data packet or a protocol-defined data packet. In this case, the first communication node may include a terminal device.

In other embodiments, the first protocol data packet includes the SDAP data packet or the protocol-defined data packet, and the second protocol data packet includes a General packet radio service Tunnel Protocol-User plane (GTP-U) data packet or the protocol-defined data packet. In this case, the first communication node may include an access network device.

In yet other embodiments, the first protocol data packet includes an NAS data packet or a protocol-defined data packet, and the second protocol data packet includes an IP data packet or a protocol-defined data packet. In this case, the first communication node may include an AMF.

Optionally, the protocol involved in the protocol-defined data packet may be a protocol prior to the disclosure or a protocol later than the disclosure.

Optionally, the protocol-defined data packet may include one of: protocol packet header + SDAP data packet/GTP-U data packet/IP data packet/NAS data packet, or the like. For example, the second protocol data packet includes a protocol packet header + SDAP data packet. For another example, the first protocol data packet includes a protocol packet header + SDAP data packet, and the second protocol data packet includes a protocol packet header + GTP-U data packet. For another example, the first protocol data packet includes a protocol packet header + NAS data packet, and the second protocol data packet includes a protocol packet header + IP data packet.

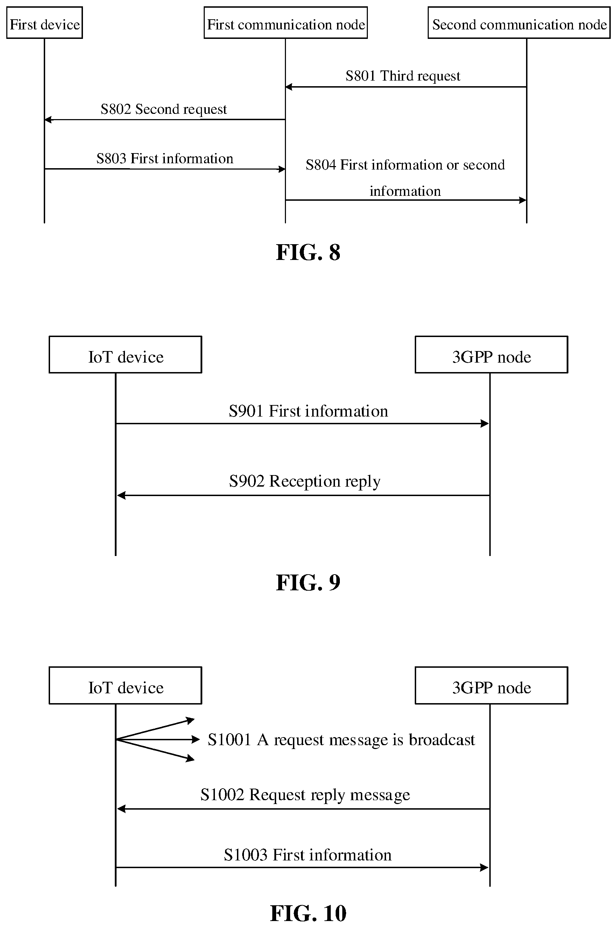

FIG. 8 is a schematic flowchart of a communication method provided in still another embodiment of the disclosure. As shown in FIG. 8, the method includes following operations S801 to S804.

At the operation S801, a second communication node transmits a third request to a first communication node, and the first communication node receives the third request transmitted by the second communication node. The third request is for requesting at least one device to transmit information, and the at least one device includes the first device.

Optionally, in some embodiments, the third request may be generated by the second communication node itself. Optionally, in other embodiments, the third request may be transmitted by an Application Function (AF) entity to the second communication node. For example, in other embodiments, before the operation S801, the method further includes that: the second communication node receives the third request transmitted by the AF entity, and transmits the third request to the first communication node. The AF entity may be an application within the operator, such as an IP Multimedia Subsystem (IMS), or the AF entity may be a third-party service, such as a web service, a video or a game. If the AF entity within the operator and other Network Functions (NF) are in a trusted domain, the AF entity directly interacts with other NFs for access. If the AF entity is not in the trusted domain, the NEF is required to access other NFs.

At the operation S802, the first communication node broadcasts a second request or transmits the second request to the first device, and the first device receives the second request broadcast or transmitted by the first communication node. The second request is for requesting transmission of information or for requesting transmission of the first information.

At the operation S803, the first device transmits the first information to the first communication node, and the first communication node receives the first information transmitted by the first device. The first information includes first identification information and/or first correlation information.

At the operation S804, the first communication node transmits the first information or second information to the second communication node, and the second communication node receives the first information or the second information transmitted by the first communication node. Herein, the second information is determined according to the first information.

Optionally, in some embodiments, when obtaining the first information or the second information, the first communication node may maintain and/or store at least part of the information in the first information or the second information. Optionally, in other embodiments, when obtaining the first information or the second information, the first communication node may transmit the first information or the second information to the AF entity.

In some embodiments, the method further includes following operation.

The second communication node stores and/or maintains correlation information of the first device. The correlation information of the first device includes at least one of: the first information or the second information received each time; time information of the first information or the second information received each time; time information about when reception of the first information or the second information starts; time information about when the reception of the first information or the second information ends; information about a time range within which the first information or the second information is received; a time interval between receptions of the first information or the second information; or time information about when at least part of the correlation information of the first device is provided to an AF entity.

The correlation information of the first device includes the time information about when the at least part of the correlation information of the first device is provided to the AF entity, so that the second communication node serves the AF entity within the time information.

In some embodiments, the method further includes following operations.

The second communication node receives a fourth request transmitted by the AF entity. The fourth request is for requesting at least part of the correlation information of the first device.

The second communication node transmits the at least part of the correlation information of the first device to the APF entity.

In some embodiments, an identifier (included in the first identification information) of an IoT device (corresponding to the first device described above) may be defined. The IoT device in any of the embodiments of the disclosure may include a low power device or a zero power device. The power supply for the low power device or the zero power device is simple, even without a battery, and relies on other peripheral sources (such as an RF signal, solar energy, mechanical energy), and thus logical functions of the low power device or the zero power device are much simpler than those of an ordinary mobile terminal.

Optionally, the identifier of the IoT device includes at least one or more of the following portions: an IoTF identifier, an owner identifier of the IoT device, 3GPP network identifier, or IoT device code.

Optionally, the IoTF identifier is an identifier of an IoTF used to maintain the IoT device. The 3GPP network node (corresponding to the first communication node described above, such as the UE, the RAN, or the core network node) may find the corresponding IoTF according to the IoTF identifier, and transmit the information to a correct IoTF.

Optionally, the owner identifier of the IoT device refers to an identifier of a service provider to which the IoT device belongs or a service provider using the IoT device, such as JD, Alibaba, or Tencent. The owner identifier of an IoT device is used to distinguish IoT devices belonging to different owner under real conditions.

Optionally, the 3GPP network identifier refers to an identifier of a network that can communicate with the IoT device, such as a PLMN identifier or a Non-Public Network (NPN) identifier of an operator.

Optionally, the IoT device code may include a specific number of the IoT device, which may uniquely identify the IoT device under one owner and/or one network identifier.

Optionally, an internal identifier and an external identifier of the IoT device may have a mapping relationship, the internal identifier of the IoT device may include a device identifier of the IoT device, and the external identifier of the IoT device may include an IoT identifier used by an application layer of the IoT device. For example, the external identifier of the IoT device may include an EPC. Optionally, the internal identifier of the IoT device may belong to the internal identifier of the 3GPP system.

Optionally, the IoT identifier for the 3GPP system may have a correspondence with the IoT identifier (such as an EPC) used by the application layer, and the 3GPP network element (corresponding to the second communication node described above) may perform conversion between the external identifier and the internal identifier according to the correspondence. For example, the IoT device and the 3GPP network element may both store a mapping relationship between the internal identifier and the external identifier of the IoT device, so that the IoT device and the 3GPP network element may determine the external identifier of the IoT device according to the internal identifier of the IoT device and the mapping relationship, or may determine the internal identifier of the IoT device according to the external identifier of the IoT device and the mapping relationship. Optionally, the 3GPP network element may regularly update the internal identifier of the IoT device to achieve better security and privacy protection effects.

Optionally, the IoT device identifier may have a one-to-one, one-to-many, or many-to-one relationship with the EPC. For example, IoT device identifier-1 may correspond to EPC-a. For another example, IoT device identifier-2, identifier-3 and identifier-44 may correspond to EPC-b. For another example, IoT device identifier-5 may correspond to EPC-c, EPC-d and EPC-e.

In some embodiments, data of the IoT device may be collected by a 3GPP node and the 3GPP node transmits the data to a third-party application. The 3GPP node may be an ordinary terminal (UE for short) or a base station node (RAN for short).

In some embodiments, the communication between the IoT device and the 3GPP node includes that: the IoT device transmits data (corresponding to part or all of the information stored in the first device described above) stored locally in the IoT device to the 3GPP node. Optionally, the local data may include an IoT device identifier (corresponding to first specific identification information of the first device described above).

FIG. 9 is a schematic flowchart of another communication method provided in another embodiment of the disclosure. As shown in FIG. 9, in the embodiment, an IoT device (corresponding to the first device described above) actively transmits information carrying content to be transmitted to a 3GPP node (including a UE/RAN, corresponding to the first communication node described above). The method includes following operation S901 and S902.

At the operation S901, an IoT device transmits first information to a 3GPP node, where the first information carries the content to be transmitted.

Optionally, the first information may include one or more of the following: an IoT device identifier, or at least part of the stored content.

At the operation S902, the 3GPP node transmits a reception reply (corresponding to the first reply information described above) to the IoT device.

Optionally, the reception reply may include one or more of the following: an identifier about a successful reception/an unsuccessful reception, an acknowledgement identifier, a new IoT device identifier (corresponding to the second specific identification information of the first device described above), or a 3GPP node identifier.

Optionally, when the IoT device receives the new IoT device identifier, the IoT device may perform updating with the new IoT device identifier, and transmit information next time using the new IoT device identifier.

FIG. 10 is a schematic flowchart of yet another communication method provided in another embodiment of the disclosure. As shown in FIG. 10, the method includes following operation S1001 to S1003.

At the operation S1001, an IoT device broadcasts a request message (corresponding to the first request described above).

Optionally, since the IoT device does not know which surrounding 3GPP nodes support transmission with the IoT device, the IoT device transmits the request message, which may be a broadcast message. The request message may be used to perform confirmation on surrounding devices. Optionally, the request message may include one or more of the following contents: an IoT device identifier, an indication about content to be transmitted, or an indication indicating search for a communication node.

At the operation S1002, a 3GPP node transmits a request reply message (corresponding to the second reply information described above) to the IoT device.

Optionally, a surrounding communication node that supports communication with the IoT device transmit the reply message to confirm that the 3GPP node is willing to communicate with the IoT device. The reply message may contain at least one of: 3GPP node information (identifier, type, and the like), a type of content to be transmitted.

At the operation S1003, the IoT device transmits first information to the 3GPP node.

Optionally, the IoT device may transmit the first information to the 3GPP node according to the content included in the reply message.

Optionally, the first information may include one or more of: an IoT device identifier, or at least part of the stored content.

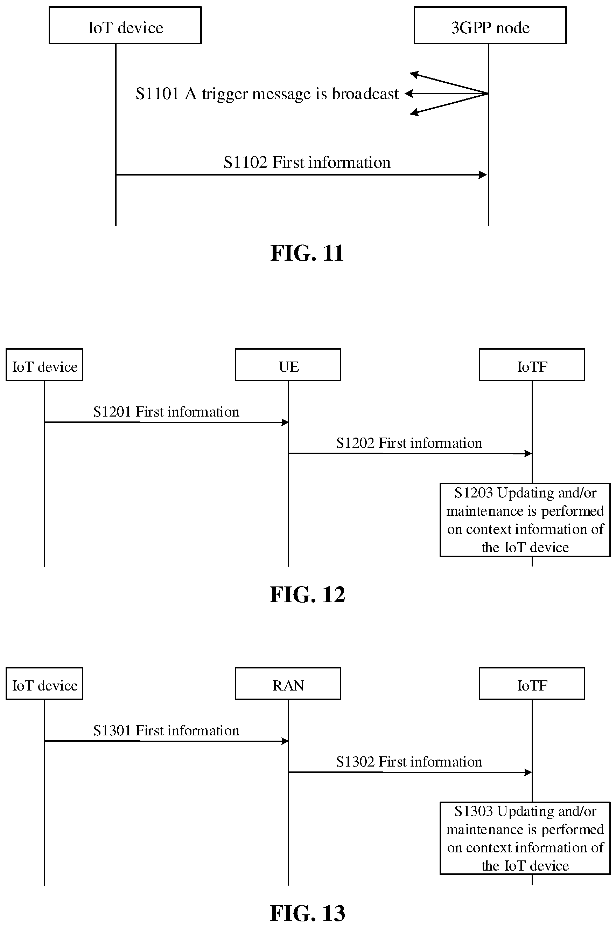

FIG. 11 is a schematic flowchart of still another communication method provided in another embodiment of the disclosure. As shown in FIG. 11, the method includes following operations S1101 and S1102.

At the operation S1101, a 3GPP node broadcasts a trigger message (corresponding to the second request described above).

Optionally, the trigger message includes at least one of: "First indication", for notifying the IoT device to transmit its data; information of a 3GPP node identifier; IoT device identifier or range, for indicating which IoT device/devices will transmit data; or content type, for indicating what type of content the IoT device transmits.

Optionally, the content type may be customized in advance. For example, the content type includes at least one of a tag, a location, a temperature, or a time.

At the operation S1102, the IoT device transmits first information to the 3GPP node.

Optionally, the first information may include one or more of: an IoT device identifier, or at least part of the stored content.

In some embodiments, IoTF, as a new node, may be a logical node merged with a current 3GPP network element (the current 3GPP network element may include NEF, AMF, NWDAF, and the like), or may become an independent new entity function.

FIG. 12 is a schematic flowchart of another communication method provided in yet another embodiment of the disclosure. As shown in FIG. 12, the method includes following operations S1201 to S1203.

At the operation S1201, an IoT device transmits first information to UE.

At the operation S1202, the UE reports the first information to an IoTF.

Optionally, the UE may determine a corresponding IoTF according to identification information of the IoTF.

At the operation S1203, the IoTF updates and/or maintains context information of the IoT device (corresponding to the correlation information in the first information described above).

FIG. 13 is a schematic flowchart of yet another communication method provided in yet another embodiment of the disclosure. As shown in FIG. 13, the method includes following operations S1301 to S1303.

At the operation S1301, an IoT device transmits first information to an RAN.

At the operation S1302, the RAN reports the first information to an IoTF.

Optionally, the RAN may determine a corresponding IoTF according to identification information of the IoTF.

At the operation S1303, the IoTF updates and/or maintains context information of the IoT device.

At the operations S1201 and S1301, the UE or the RAN node may collect the content (or information) of the IoT device through a certain pattern.

At the operation S1202, the UE transmits the acquired information of the IoT device (corresponding to the first information transmitted by the IoT device described above) (including the IoT device identifier and/or other content information) to the IoTF. Here, the UE can determine to which IoTF information of different IoT devices should be transmitted through an IoTF field carried in the IoT device identifier.

The interaction of the UE with the IoTF may be performed through a control plane or a user plane.

For the control plane, the UE encapsulates the obtained IoT device information into a container (e.g., a payload container), and an external readable part of the container represents a container with "type = identification information of the IoT device" and "target node = IoTF identifier".

For the user plane, the UE includes the type and target node information in an extended SDAP packet header. After the header is received, the RAN encapsulates the type and target node information of the packet header into a GTP-U packet header. A payload of the GTP-U data packet may be used to transmit the collected IoT device information, so that the core network UPF can transmit the payload content to the corresponding IoTF node after receiving the GTP-U data packet.

At the operation S1302, the RAN node transmits the acquired information of the IoT device (including the IoT device identifier and/or other content information) to the IoTF. Here, the RAN node can determine to which IoTF information of different IoT devices should be transmitted through an IoTF field carried in the IoT device identifier.

The interaction of the RAN with the IoTF may be performed through a control plane or a user plane.

For the control plane, the protocol supported by an interface between the RAN node and the core network IoTF network element is required to be able to identify two contents: "type = identification information of the IoT device" and "target node = IoTF identifier".

For the user plane, the RAN may encapsulate the type and the target node information of the packet header into a GTP-U packet header, and a payload of the GTP-U data packet can be used to transmit the collected IoT device information, so that the core network UPF can transmit the payload content to the corresponding IoTF node after receiving the GTP-U data packet.

At the operation S1203 or S1303, after receiving the IoT device information, the IoTF may generate context information for each IoT device, where the context information is used to maintain the status of the IoT device. Optionally, the context information may be used to expose the context correlation information to a third party or other 3GPP network elements.

Table 1 is a diagram showing contents in the context information:

**Table 1**

| Identification information of IoT device | Containing internal and/or external identifier |
|---|---|
| Information 1: Location | Location information of IoT device, containing time information (such as timestamp) of location information collected each time |
| Information 2: Sensor Temperature | When the IoT device is a sensor, temperature information as well as time information collected each time are reported |
| Information 3: Sensor Speed | When the IoT device is a sensor, speed information as well as time information collected each time are reported |
| ...... | |
| Expiration Time | Lifecycle management time of the IoT device may include at least one of: |
| | the time when the collection of the information starts or ends; |
| | a time interval between collections of information; or |
| | effective time period for providing information to a third party |

In the embodiments of the disclosure, definition of identifiers of IoT devices, and collection, storage and management of IoT device information are implemented. Limited changes made to existing architecture and processes can largely avoid excessive influence of the network side on a special device (i.e., the IoT device), which is helpful to collect and manage effective information of the IoT device in large range, wide coverage, non-temporal or geographical continuous scenarios.

In the embodiments of the disclosure, the first device may include an ordinary terminal. For example, the first device may include a terminal device. The solutions in the embodiments of the disclosure may be applied to a future communication network, such as a 6G communication network or a 7G communication network.

Preferred embodiments of the present disclosure have been described in detail with reference to the accompanying drawings, but the present disclosure is not limited to the specific details of the above embodiments. Within the scope of the technical conception of the present disclosure, various simple modifications can be made to the technical solutions of the present disclosure, and these simple modifications all fall within the scope of protection of the present disclosure. For example, various specific technical features described in the above specific embodiments may be combined in any suitable manner without conflict. Various possible combinations are not further described in the present disclosure to avoid unnecessary repetition. For another example, various different implementations of the present disclosure can also be combined arbitrarily, which should also be considered as the content disclosed by the present disclosure as long as they do not violate the conception of the present disclosure. For another example, various embodiments described in the present disclosure and/or the technical features in various embodiments can be arbitrarily combined with the related technologies without conflict, and the technical solution obtained after the combination should also fall within the scope of protection of the present disclosure.

It should also be understood that in the various method embodiments of the present disclosure, the size of the serial numbers of the above-mentioned various processes do not indicate a sequence of execution. The sequence of execution of the processes should be determined by their functions and inherent logics, and should not constitute a limitation on the implementation process of the embodiments of the present disclosure. Further, in embodiments of the present disclosure, the terms "downlink", "uplink" and "sidelink" are used to indicate transmission directions of signals or data. The term "downlink" is used to denote that the transmission direction of the signals or the data is a first direction from a station to user equipment in a cell. The term "uplink" is used to denote that the transmission direction of the signals or the data is a second direction from the user equipment in the cell to the station. The term "sidelink" is used to denote that the transmission direction of the signals or the data is a third direction from first user equipment to second user equipment. For example, "downlink signal" means that the transmission direction of the signal is the first direction. In addition, in the embodiments of the present disclosure, the term "and/or" refers to only an association relationship for describing associated objects and represents that three relationships may exist. Specifically, A and/or B may represent three cases: i.e., only A exists, both A and B exist, and only B exists. Furthermore, character "/" in the disclosure usually represents that previous and next associated objects form an "or" relationship.

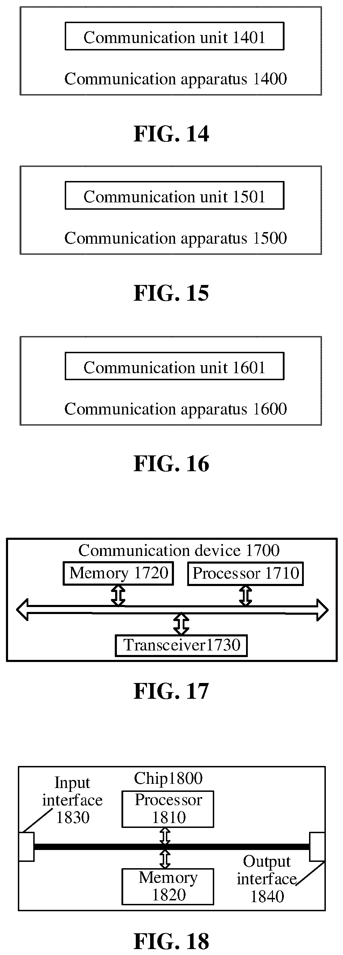

FIG. 14 is a schematic structural diagram of a communication apparatus provided in an embodiment of the disclosure, which is applied to a terminal device. As shown in FIG. 14, the communication apparatus 1400 includes a communication unit 1401.

The communication unit 1401 is configured to transmit first information to a first communication node, where the first information includes first identification information and/or first correlation information.

In some embodiments, the communication apparatus 1400 further includes a determining unit configured to determine the first information.

In some embodiments, the first identification information includes or indicates at least one of: identification information of a target communication node for maintaining and/or storing at least part of the first information; attribution identification information corresponding to the first device; identification information of a specific communication node that communicates with the first device; first labeling information of the first device; a first EPC of the first device; first communication identification information of the first device; first network identification information of the first device; geographic identification information of the first device; service identification information of the first device; or service type identification information of the first device.

In some embodiments, the first correlation information includes or indicates at least one of: tag information for at least part of the first information; location information of the first device; status information of the first device; time information about when the first device transmits the first information; part or all of information stored in the first device; information determined by the first device according to the information stored in the first device; or a correspondence between at least two pieces of identification information among the first labeling information of the first device, the first EPC of the first device, the first communication identification information of the first device and the first network identification information of the first device.

In some embodiments, the communication unit 1401 is further configured to receive first reply information transmitted by the first communication node.

In some embodiments, the communication unit 1401 is further configured to broadcast a first request or transmit the first request to the first communication node. The first request is for requesting to transmit information or for requesting to transmit the first information.

In some embodiments, the communication unit 1401 is further configured to receive second reply information transmitted by the first communication node.

In some embodiments, the communication unit 1401 is further configured to receive a second request broadcast or transmitted by the first communication node. The second request is for requesting transmission of information or for requesting transmission of the first information.

In some embodiments, the first reply information and/or the second reply information include at least one of: indication information indicating a successful reception; indication information indicating an unsuccessful reception; ACK; NACK; second labeling information of the first device; a second EPC of the first device; second communication identification information of the first device; second network identification information of the first device; identification information of the first communication node; identification information of a target communication node for maintaining and/or storing at least part of the first information; or indication information indicating a type and/or a content of information to be transmitted.

In some embodiments, the communication apparatus 1400 further includes a storage unit, configured to store part or all of the first reply information or part or all of the second reply information.

In some embodiments, the first request includes at least one of: first labeling information of the first device; a first EPC of the first device; first communication identification information of the first device; first network identification information of the first device; indication information indicating a type and/or a content of the first information; or indication information that indicates acquisition of or search for a specific communication node to which information is to be transmitted.

In some embodiments, the second request includes at least one of: indication information indicating transmission of the information or transmission of the first information; identification information of the first communication node; at least one of following for at least one device: first labeling information, first EPC, first communication identification information, or first network identification information, where the at least one device includes the first device; at least one of following corresponding to the at least one device: a first labeling information range, a first EPC range, a first communication identification information range, or a first network identification information range; or indication information indicating a type and/or a content of information to be transmitted.

In some embodiments, the communication unit 1401 is further configured to perform one of the following operations.

The communication unit 1401 periodically transmits the first information to the first communication node.

The communication unit 1401 transmits the first information to the first communication node in a case where the first information is different from last transmitted third information.

The communication unit 1401 transmits the first information or the first identification information to the first communication node in a case where the first identification information is different from last transmitted second identification information.

The communication unit 1401 transmits the first information or the first correlation information to the first communication node in a case where the first correlation information is different from last transmitted second correlation information and/or an amount of change between the first correlation information and the last transmitted second correlation information exceeds or reaches a first threshold.

FIG. 15 is a schematic structural diagram of a communication apparatus provided in an embodiment of the disclosure, which is applied to a terminal device. As shown in FIG. 15, the communication apparatus 1500 includes a communication unit 1501.

The communication unit 1501 is configured to receive first information transmitted by a first device, where the first information includes first identification information and/or first correlation information.

In some embodiments, the communication unit 1501 is further configured to transmit the first information or second information, where the second information is determined according to the first information.

In some embodiments, the communication unit 1501 is further configured to transmit the first information or second information to the second communication node, where the second information is determined according to the first information.

In some embodiments, the communication apparatus 1500 further includes a determining unit configured to determine the first information or the second information.

In some embodiments, the first identification information includes or indicates at least one of: identification information of a target communication node for maintaining and/or storing at least part of the first information; attribution identification information corresponding to the first device; identification information of a specific communication node that communicates with the first device; first labeling information of the first device; a first Electronic Product Code (EPC) of the first device; first communication identification information of the first device; first network identification information of the first device; geographic identification information of the first device; service identification information of the first device; or service type identification information of the first device.

In some embodiments, the first correlation information includes or indicates at least one of: tag information for at least part of the first information; location information of the first device; status information of the first device; time information about when the first device transmits the first information; part or all of information stored in the first device; information determined, by the first device, according to the information stored in the first device; or a correspondence between at least two pieces of identification information among the first labeling information of the first device, the first EPC of the first device, the first communication identification information of the first device and the first network identification information of the first device.

In some embodiments, the communication unit 1501 is further configured to transmit first reply information to the first device.

In some embodiments, the communication unit 1501 is further configured to receive a first request broadcast or transmitted by the first device, where the first request is for requesting to transmit information or for requesting to transmit the first information.

In some embodiments, the communication unit 1501 is further configured to transmit second reply information to the first device.

In some embodiments, the communication unit 1501 is further configured to broadcast a second request or transmit a second request to the first device, where the second request is for requesting transmission of information or for requesting transmission of the first information.

In some embodiments, the first reply information and/or the second reply information includes at least one of: indication information indicating a successful reception; indication information indicating an unsuccessful reception; ACK; NACK; second labeling information of the first device; a second EPC of the first device; second communication identification information of the first device; second network identification information of the first device; identification information of the first communication node; identification information of a target communication node for maintaining and/or storing at least part of the first information; or indication information indicating a type and/or a content of information to be transmitted.

In some embodiments, the first request includes at least one of: first labeling information of the first device; a first EPC of the first device; first communication identification information of the first device; first network identification information of the first device; indication information indicating a type and/or a content of the first information; or indication information that indicates acquisition of or search for a specific communication node to which information is to be transmitted.

In some embodiments, the second request includes at least one of: indication information indicating transmission of information or transmission of the first information; identification information of the first communication node; at least one of following for at least one device: first labeling information, first EPC, first communication identification information, or first network identification information, where the at least one device includes the first device; at least one of following corresponding to the at least one device: a first labeling information range, a first EPC range, a first communication identification information range, or a first network identification information range; or indication information indicating a type and/or a content of information to be transmitted.

In some embodiments, the communication unit 1501 is further configured to periodically receive the first information.

In some embodiments, the first information is transmitted by the first device in a case where the first information is different from last transmitted third information. Alternatively, the first information or the first identification information is transmitted by the first device in a case where the first identification information is different from last transmitted second identification information. Alternatively, the first information or the first correlation information is transmitted by the first device in a case where the first correlation information is different from last transmitted second correlation information and/or an amount of change between the first correlation information and the last transmitted second correlation information exceeds or reaches a first threshold.

In some embodiments, the communication unit 1501 is further configured to receive a first protocol data packet, where the first protocol data packet includes the first information or the second information.

In some embodiments, the communication unit 1501 is further configured to transmit a payload container or a second protocol data packet to the second communication node.

The payload container or the second protocol data packet includes the first information or the second information. A payload of the payload container includes the first information or the second information, and readable information of the payload container includes at least part of the first identification information.

In some embodiments, a packet header of the first protocol data packet and/or a packet header of the second protocol data packet includes at least part of the first identification information; and/or a payload portion of the first protocol data packet and/or a payload portion of the second protocol data packet includes the first information or the second information.

In some embodiments, the second protocol data packet includes an SDAP data packet or a protocol-defined data packet. Alternatively, the first protocol data packet includes the SDAP data packet or the protocol-defined data packet, and the second protocol data packet includes a GTP-U data packet or the protocol-defined data packet. Alternatively, the first protocol data packet includes an NAS data packet or the protocol-defined data packet, and the second protocol data packet includes an IP data packet or the protocol-defined data packet.

In some embodiments, the communication unit 1501 is further configured to receive a third request transmitted by the second communication node.

The third request is for requesting at least one device to transmit information, where the at least one device includes the first device.

FIG. 16 is a schematic structural diagram of a communication apparatus provided in an embodiment of the disclosure, which is applied to a terminal device. As shown in FIG. 16, the communication apparatus 1600 includes a communication unit 1601.

The communication unit 1601 is configured to receive first information or second information transmitted by a first communication node, where the second information is determined according to the first information, and the first information includes first identification information and/or first correlation information.

In some embodiments, the communication apparatus 1600 further includes a processing unit 1602. The processing unit 1602 is configured to process the first information or the second information, or the processing unit 1602 is configured to store and/or maintain the first information or the second information.

In some embodiments, the first identification information includes or indicates at least one of: identification information of a target communication node for maintaining and/or storing at least part of the first information; attribution identification information corresponding to the first device; identification information of a specific communication node that communicates with the first device; first labeling information of the first device; a first EPC of the first device; first communication identification information of the first device; first network identification information of the first device; geographic identification information of the first device; service identification information of the first device; or service type identification information of the first device.

In some embodiments, the first correlation information includes or indicates at least one of: tag information for at least part of the first information; location information of the first device; status information of the first device; time information about when the first device transmits the first information; part or all of information stored in the first device; information determined, by the first device, according to the information stored in the first device; or a correspondence between at least two pieces of identification information among the first labeling information of the first device, the first EPC of the first device, the first communication identification information of the first device and the first network identification information of the first device.

In some embodiments, the communication unit 1601 is further configured to periodically receive the first information or the second information transmitted by the first communication node.

In some embodiments, the first information is transmitted by the first device in a case where the first information is different from last transmitted third information. Alternatively, the first information or the first identification information is transmitted by the first device in a case where the first identification information is different from last transmitted second identification information. Alternatively, the first information or the first correlation information is transmitted by the first device in a case where the first correlation information is different from last transmitted second correlation information and/or an amount of change between the first correlation information and the last transmitted second correlation information exceeds or reaches a first threshold.

In some embodiments, the communication unit 1601 is further configured to receive a payload container or a second protocol data packet transmitted by the first communication node. The payload container or the second protocol data packet includes the first information or the second information. A payload of the payload container includes the first information or the second information, and readable information of the payload container includes at least part of the first identification information.

In some embodiments, a packet header of the second protocol data packet includes at least part of the first identification information; and/or a payload portion of the second protocol data packet includes the first information or the second information.

In some embodiments, the second protocol data packet includes an SDAP data packet or a protocol-defined data packet. Alternatively, the second protocol data packet includes a GTP-U data packet or the protocol-defined data packet. Alternatively, the second protocol data packet includes an IP data packet or the protocol-defined data packet.

In some embodiments, the communication unit 1601 is further configured to transmit a third request to the first communication node. Alternatively, the communication unit 1601 is further configured to receive a third request transmitted by an AF entity, and transmit the third request to the first communication node.

The third request is for requesting at least one device to transmit information, where the at least one device includes the first device.

In some embodiments, the processing unit 1602 is further configured to store and/or maintain correlation information of the first device. The correlation information of the first device includes at least one of: the first information or the second information received each time; time information of the first information or the second information received each time; time information about when reception of the first information or the second information starts; time information about when the reception of the first information or the second information ends; information about a time range within which the first information or the second information is received; a time interval between receptions of the first information or the second information; or time information about when at least part of the correlation information of the first device is provided to an AF entity.

In some embodiments, the communication unit 1601 is further configured to receive a fourth request transmitted by the AF entity, where the fourth request is for requesting at least part of the correlation information of the first device; and transmit the at least part of the correlation information of the first device to the APF entity.

Optionally, the communication apparatus 1400, the communication apparatus 1500, and the communication apparatus 1600 may be applied to the first device, the first communication node, and the second communication node, respectively.

Those skilled in the art would appreciate that the relevant description of the above communication apparatuses according to the embodiments of the present disclosure may be understood with reference to the relevant description of the communication methods according to the embodiments of the present disclosure.

FIG. 17 is a schematic structural diagram of a communication device provided in an embodiment of the disclosure. The communication device 1700 may include one of a first device, a first communication node or a second communication node. The communication device 1700 illustrated in FIG. 17 may include a processor 1710, a memory 1720 and a transceiver 1730. The memory 1720 stores a computer program executable on the processor 1710. The processor 1710 performs the communication method in any one of the above embodiments in conjunction with the transceiver 1730 when executing the program. Optionally, the memory 1720 may be a separate device independent of the processor 1710 or may be integrated in the processor 1710.

In some embodiments, as illustrated in FIG. 17, the communication device 1700 may include the transceiver 1730, and the processor 1710 may control the transceiver 1730 to communicate with other devices. Specifically, the processor 1710 may control the transceiver 1730 to transmit information or data to other devices, or receive information or data from other devices. The transceiver 1730 may include a transmitter and a receiver. The transceiver 1230 may further include one or more antennas.

In some embodiments, the communication device 1700 may specifically be the first device, the first communication node or the second communication node in the embodiments of the present disclosure, and the communication device 1700 may implement corresponding processes implemented by the first device, the first communication node or the second communication node in various methods of the embodiments of the present disclosure, which are not elaborated here for the sake of brevity.

An embodiment of the disclosure also provides a computer storage medium having stored thereon one or more programs that, when executed by one or more processors, cause the one or more processors to perform the communication method in any one of the embodiments of the disclosure.

In some embodiments, the computer-readable storage medium may be applied to the first device, the first communication node or the second communication node in the embodiments of the disclosure, and the computer program causes the computer to execute corresponding processes implemented by the first device, the first communication node or the second communication node in various methods of the embodiments of the present disclosure, which are not elaborated here for the sake of brevity.

FIG. 18 is a schematic structural diagram of a chip according to an embodiment of the disclosure. The chip 1800 illustrated in FIG. 18 includes a processor 1810 configured to invoke and run a computer program from a memory to implement the methods in any one of the embodiments of the present disclosure.

In some embodiments, as illustrated in FIG. 18, the chip 1800 may further include a memory 1820, and the processor 1810 may invoke and run a computer program from the memory 1820 to implement the methods in the embodiments of the present disclosure.

The memory 1820 may be a separate device independent of the processor 1810, or may be integrated in the processor 1810.

In some embodiments, the chip 1800 may further include an input interface 1830. The processor 1810 may control the input interface 1830 to communicate with other devices or chips. Specifically, the processor 1810 may control the input interface 1330 to acquire information or data transmitted by other devices or chips.

In some embodiments, the chip 1800 may further include an output interface 1840. The processor 1810 may control the output interface 1840 to communicate with other devices or chips. Specifically, the processor 1810 may control the output interface 1840 to output information or data to other devices or chips.

In some embodiments, the chip may be applied to the first device, the first communication node or the second communication node in the embodiments of the present disclosure, and the chip may implement corresponding processes implemented by the first device, the first communication node or the second communication node in various methods of the embodiments of the present disclosure, which are not elaborated here for the sake of brevity. It should be understood that the chip mentioned in the embodiments of the present disclosure may also be referred to as a system-level chip, a system chip, a chip system, or a system-on-chip chip, or the like.

An embodiment of the disclosure further provides a computer program product including a computer storage medium. The computer storage medium stores a computer program including instructions executable by at least one processor that, when executed by the at least one processor, implement the communication method in any one of the embodiments of the disclosure.

In some embodiments, the computer program product may be applied to the first device, the first communication node or the second communication node in the embodiments of the disclosure, and the computer program instructions cause the computer to execute corresponding processes implemented by the first device, the first communication node or the second communication node in various methods of the embodiments of the present disclosure, which are not elaborated here for the sake of brevity.

Optionally, the computer program product in the embodiment of the disclosure may also be referred to as a software product in other embodiments.

An embodiment of the disclosure further provides a computer program that causes a computer to execute the communication method in any one of the embodiments of the disclosure. In some embodiments, the computer program may be applied to the first device, the first communication node or the second communication node in the embodiments of the disclosure, and the computer program causes a computer to execute corresponding processes implemented by the first device, the first communication node or the second communication node in various methods of the embodiments of the present disclosure when the computer program is run on the computer, which are not elaborated here for the sake of brevity.

The processor, the communication apparatus, the processor or the chip in the embodiments of the disclosure may be an integrated circuit chip having signal processing capability. In implementation, the various operations of the above method embodiments may be accomplished by integrated logic circuit of hardware or instructions in the form of software in a processor. The processor, the communication apparatus, the processor or the chip described above may include an integration of any one or more of: a general purpose processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), an embedded neural-network processing unit (NPU), a controller, a microcontroller, a microprocessor, a programmable logic device, a discrete gate or transistor logic device, a discrete hardware component. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a Random-Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads information in the memory and completes the operations of the above methods in combination with its hardware.

It is understood that the memory or the computer storage medium in embodiments of the present disclosure may be volatile memory or non-volatile memory or may include both volatile and non-volatile memory. The non-volatile memory may be an ROM, a PROM, an Erasable PROM (EPROM), an EEPROM, or a flash memory. The volatile memory may be an RAM which serves as an external cache. By way of illustration but not limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include but not be limited to these and any other suitable types of memories.

It should be understood that the memory or the computer storage medium described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

Those of ordinary skill in the art would appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use different methods for each particular application to implement the described functionality, but such implementation should not be considered outside the scope of the present disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

In several embodiments provided in the present disclosure, it should be understood that the disclosed systems, devices and methods may be implemented in other ways. For example, the above-described embodiments of the devices are only schematic, for example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interface, device or unit, and may be electrical, mechanical or other forms.

The units illustrated as separate components may or may not be physically separated, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

In any one of the embodiments of the disclosure, a time interval, a time period, within a time range, within a time duration, or within a time window, or the like may include both the endpoint times, or may include part of the endpoint times (for example, including the left endpoint time but not including the right endpoint time, or including the right endpoint time but not including the left endpoint time), or may not include the endpoint times.

The functions may be stored in a computer readable storage medium if implemented in the form of software functional units and sold or used as stand-alone products. In view of this understanding, the technical solutions of the present disclosure in essence, or the part that contributes to the related art, or the part of the technical solutions can be embodied in the form of a software product. The computer software product is stored in a storage medium and includes instructions that enable a computer device (which may be a personal computer, server, network device, or the like) to perform all or part of the operations of the methods described in various embodiments of the present disclosure. The aforementioned storage medium includes a USB flash disk, a removable hard disk, a ROM, a RAM, a magnetic disk or an optical disk and other medium capable of storing program codes.

The foregoing are only the specific implementations of the disclosure; however, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

## Claims

**1.** A communication method, comprising:
transmitting, by a first device, first information to a first communication node, wherein the first information comprises first identification information and/or first correlation information.

**2.** The method of claim 1, wherein the first identification information comprises or indicates at least one of:
identification information of a target communication node for maintaining and/or storing at least part of the first information;
attribution identification information corresponding to the first device;
identification information of a specific communication node that communicates with the first device;
first labeling information of the first device;
a first Electronic Product Code, EPC, of the first device;
first communication identification information of the first device;
first network identification information of the first device;
geographic identification information of the first device;
service identification information of the first device; or
service type identification information of the first device; and
wherein the first correlation information comprises or indicates at least one of:
tag information for at least part of the first information;
location information of the first device;
status information of the first device;
time information about when the first device transmits the first information;
part or all of information stored in the first device;
information determined, by the first device, according to the information stored in the first device; or
a correspondence between at least two pieces of identification information among the first labeling information of the first device, the first EPC of the first device, the first communication identification information of the first device and the first network identification information of the first device.

**3.** The method of claim 1 or 2, further comprising:
receiving, by the first device, first reply information transmitted by the first communication node.

**4.** The method of any one of claims 1 to 3, further comprising:
broadcasting, by the first device, a first request or transmitting the first request to the first communication node, wherein the first request is for requesting to transmit information or for requesting to transmit the first information; and/or
receiving, by the first device, second reply information transmitted by the first communication node.

**5.** The method of any one of claims 1 to 3, further comprising:
receiving, by the first device, a second request broadcast or transmitted by the first communication node, wherein the second request is for requesting transmission of information or for requesting transmission of the first information.

**6.** The method of claim 3 or 4, wherein the first reply information and/or the second reply information comprises at least one of:
indication information indicating a successful reception;
indication information indicating an unsuccessful reception;
acknowledgement, ACK;
non-acknowledgement, NACK;
second labeling information of the first device;
a second EPC of the first device;
second communication identification information of the first device;
second network identification information of the first device;
identification information of the first communication node;
identification information of a target communication node for maintaining and/or storing at least part of the first information; or
indication information indicating a type and/or a content of information to be transmitted.

**7.** The method of claim 3, 4 or 5, further comprising:
storing, by the first device, part or all of the first reply information, or part or all of the second reply information.

**8.** The method of claim 4, wherein the first request comprises at least one of:
first labeling information of the first device;
a first EPC of the first device;
first communication identification information of the first device;
first network identification information of the first device;
indication information indicating a type and/or a content of the first information; or
indication information that indicates acquisition of or search for a specific communication node to which information is to be transmitted.

**9.** The method of claim 5, wherein the second request comprises at least one of:
indication information indicating transmission of the information or transmission of the first information;
identification information of the first communication node;
at least one of following for at least one device: first labeling information, first EPC, first communication identification information, or first network identification information, wherein the at least one device comprises the first device;
at least one of following corresponding to the at least one device: a first labeling information range, a first EPC range, a first communication identification information range, or a first network identification information range; or
indication information indicating a type and/or a content of information to be transmitted.

**10.** The method of any one of claims 1 to 9, wherein transmitting, by the first device, the first information to the first communication node comprises one of:
periodically transmitting, by the first device, the first information to the first communication node;
transmitting, by the first device, the first information to the first communication node in a case where the first information is different from last transmitted third information;
transmitting, by the first device, the first information or the first identification information to the first communication node in a case where the first identification information is different from last transmitted second identification information; or
transmitting, by the first device, the first information or the first correlation information to the first communication node in a case where the first correlation information is different from last transmitted second correlation information and/or an amount of change between the first correlation information and the last transmitted second correlation information exceeds or reaches a first threshold.

**11.** A communication method, comprising:
receiving, by a first communication node, first information transmitted by a first device, wherein the first information comprises first identification information and/or first correlation information.

**12.** The method of claim 11, further comprising:
transmitting, by the first communication node, the first information or second information, wherein the second information is determined according to the first information.

**13.** The method of claim 11 or 12, wherein the first identification information comprises or indicates at least one of:
identification information of a target communication node for maintaining and/or storing at least part of the first information;
attribution identification information corresponding to the first device;
identification information of a specific communication node that communicates with the first device;
first labeling information of the first device;
a first Electronic Product Code, EPC, of the first device;
first communication identification information of the first device;
first network identification information of the first device;
geographic identification information of the first device;
service identification information of the first device; or
service type identification information of the first device; and
wherein the first correlation information comprises or indicates at least one of:
tag information for at least part of the first information;
location information of the first device;
status information of the first device;
time information about when the first device transmits the first information;
part or all of information stored in the first device;
information determined, by the first device, according to the information stored in the first device; or
a correspondence between at least two pieces of identification information among the first labeling information of the first device, the first EPC of the first device, the first communication identification information of the first device and the first network identification information of the first device.

**14.** The method of any one of claims 11 to 13, further comprising:
transmitting, by the first communication node, first reply information to the first device.

**15.** The method of any one of claims 11 to 14, further comprising:
receiving, by the first communication node, a first request broadcast or transmitted by the first device, wherein the first request is for requesting to transmit information or for requesting to transmit the first information; and/or
transmitting, by the first communication node, second reply information to the first device.

**16.** The method of any one of claims 11 to 14, further comprising:
broadcasting, by the first communication node, a second request or transmitting the second request to the first device, wherein the second request is for requesting transmission of information or for requesting transmission of the first information.

**17.** The method of claim 14 or 15, wherein the first reply information and/or the second reply information comprises at least one of:
indication information indicating a successful reception;
indication information indicating an unsuccessful reception;
acknowledgement, ACK;
non-acknowledgement, NACK;
second labeling information of the first device;
a second EPC of the first device;
second communication identification information of the first device;
second network identification information of the first device;
identification information of the first communication node;
identification information of a target communication node for maintaining and/or storing at least part of the first information; or
indication information indicating a type and/or a content of information to be transmitted.

**18.** The method of claim 15, wherein the first request comprises at least one of:
first labeling information of the first device;
a first EPC of the first device;
first communication identification information of the first device;
first network identification information of the first device;
indication information indicating a type and/or a content of the first information; or
indication information that indicates acquisition of or search for a specific communication node to which information is to be transmitted.

**19.** The method of claim 16, wherein the second request comprises at least one of:
indication information indicating transmission of information or transmission of the first information;
identification information of the first communication node;
at least one of following for at least one device: first labeling information, first EPC, first communication identification information, or first network identification information, wherein the at least one device comprises the first device;
at least one of following corresponding to the at least one device: a first labeling information range, a first EPC range, a first communication identification information range, or a first network identification information range; or
indication information indicating a type and/or a content of information to be transmitted.

**20.** The method of any one of claims 11 to 19, wherein receiving, by the first communication node, the first information transmitted by the first device comprises:
periodically receiving, by the first communication node, the first information; or
the first information is transmitted by the first device in a case where the first information is different from last transmitted third information; or
the first information or the first identification information is transmitted by the first device in a case where the first identification information is different from last transmitted second identification information; or
the first information or the first correlation information is transmitted by the first device in a case where the first correlation information is different from last transmitted second correlation information and/or an amount of change between the first correlation information and the last transmitted second correlation information exceeds or reaches a first threshold.

**21.** The method of any one of claims 11 to 20, wherein receiving, by the first communication node, the first information transmitted by the first device comprises:
receiving, by the first communication node, a first protocol data packet, wherein the first protocol data packet comprises the first information or the second information;
and/or
wherein transmitting, by the first communication node, the first information or the second information to the second communication node comprises:
transmitting, by the first communication node, a payload container or a second protocol data packet to the second communication node,
wherein the payload container or the second protocol data packet comprises the first information or the second information; a payload of the payload container comprises the first information or the second information, and readable information of the payload container comprises at least part of the first identification information.

**22.** The method of claim 21, wherein
a packet header of the first protocol data packet and/or a packet header of the second protocol data packet comprises at least part of the first identification information; and/or
a payload portion of the first protocol data packet and/or a payload portion of the second protocol data packet comprises the first information or the second information.

**23.** The method of claim 21 or 22, wherein
the second protocol data packet comprises a Service Data Adaptation Protocol, SDAP, data packet or a protocol-defined data packet; or
the first protocol data packet comprises the SDAP data packet or the protocol-defined data packet, and the second protocol data packet comprises a General packet radio service Tunnel Protocol-User plane, GTP-U, data packet or the protocol-defined data packet; or
the first protocol data packet comprises a Non-Access Layer, NAS, data packet or the protocol-defined data packet, and the second protocol data packet comprises an Internet Protocol, IP, data packet or the protocol-defined data packet.

**24.** The method of claim 16, further comprising:
receiving, by the first communication node, a third request transmitted by the second communication node,
wherein the third request is for requesting at least one device to transmit information, the at least one device comprising the first device.

**25.** A communication method, comprising:
receiving, by a second communication node, first information or second information transmitted by a first communication node, wherein the second information is determined according to the first information, and the first information comprises first identification information and/or first correlation information.

**26.** The method of claim 25, wherein the first identification information comprises or indicates at least one of:
identification information of a target communication node for maintaining and/or storing at least part of the first information;
attribution identification information corresponding to the first device;
identification information of a specific communication node that communicates with the first device;
first labeling information of the first device;
a first Electronic Product Code, EPC, of the first device;
first communication identification information of the first device;
first network identification information of the first device;
geographic identification information of the first device;
service identification information of the first device; or
service type identification information of the first device; and
wherein the first correlation information comprises or indicates at least one of:
tag information for at least part of the first information;
location information of the first device;
status information of the first device;
time information about when the first device transmits the first information;
part or all of information stored in the first device;
information determined, by the first device, according to the information stored in the first device; or
a correspondence between at least two pieces of identification information among the first labeling information of the first device, the first EPC of the first device, the first communication identification information of the first device and the first network identification information of the first device.

**27.** The method of claim 25 or 26, wherein receiving, by the second communication node, the first information or the second information transmitted by the first communication node comprises:
periodically receiving, by the second communication node, the first information or the second information transmitted by the first communication node; or
the first information is transmitted by the first device in a case where the first information is different from last transmitted third information; or
the first information or the first identification information is transmitted by the first device in a case where the first identification information is different from last transmitted second identification information; or
the first information or the first correlation information is transmitted by the first device in a case where the first correlation information is different from last transmitted second correlation information and/or an amount of change between the first correlation information and the last transmitted second correlation information exceeds or reaches a first threshold.

**28.** The method of any one of claims 25 to 27, wherein receiving, by the second communication node, the first information or the second information transmitted by the first communication node comprises:
receiving, by the second communication node, a payload container or a second protocol data packet transmitted by the first communication node;
wherein the payload container or the second protocol data packet comprises the first information or the second information; a payload of the payload container comprises the first information or the second information, and readable information of the payload container comprises at least part of the first identification information.

**29.** The method of claim 28, wherein
a packet header of the second protocol data packet comprises at least part of the first identification information; and/or
a payload portion of the second protocol data packet comprises the first information or the second information.

**30.** The method of claim 28 or 29, wherein
the second protocol data packet comprises a Service Data Adaptation Protocol, SDAP, data packet or a protocol-defined data packet; or
the second protocol data packet comprises a General packet radio service Tunnel Protocol-User plane, GTP-U, data packet or the protocol-defined data packet; or
the second protocol data packet comprises an Internet Protocol, IP, data packet or the protocol-defined data packet.

**31.** The method of any one of claims 25 to 30, further comprising:
transmitting, by the second communication node, a third request to the first communication node; or
receiving, by the second communication node, a third request transmitted by an Application Function, AF, entity, and transmitting the third request to the first communication node;
wherein the third request is for requesting at least one device to transmit information, the at least one device comprising the first device.

**32.** The method of any one of claims 25 to 31, further comprising:
storing and/or maintaining, by the second communication node, correlation information of the first device, wherein the correlation information of the first device comprises at least one of:
the first information or the second information received each time;
time information of the first information or the second information received each time;
time information about when reception of the first information or the second information starts;
time information about when the reception of the first information or the second information ends;
information about a time range within which the first information or the second information is received;
a time interval between receptions of the first information or the second information; or
time information about when at least part of the correlation information of the first device is provided to an Application Function, AF, entity.

**33.** The method of claim 32, further comprising:
receiving, by the second communication node, a fourth request transmitted by the AF entity, wherein the fourth request is for requesting at least part of the correlation information of the first device; and
transmitting, by the second communication node, the at least part of the correlation information of the first device to the APF entity.

**34.** A communication apparatus, comprising:
a communication unit, configured to transmit first information to a first communication node, wherein the first information comprises first identification information and/or first correlation information.

**35.** A communication apparatus, comprising:
a communication unit, configured to receive first information transmitted by a first device, wherein the first information comprises first identification information and/or first correlation information.

**36.** A communication apparatus, comprising:
a communication unit, configured to receive first information or second information transmitted by a first communication node, wherein the second information is determined according to the first information, and the first information comprises first identification information and/or first correlation information.

**37.** A first device, comprising: a processor, a memory and a transceiver;
the memory is configured to store a computer program executable on a processor; and
the processor is configured to perform the method of any one of claims 1 to 10 in conjunction with the transceiver when executing the computer program.

**38.** A first communication node, comprising: a processor, a memory and a transceiver;
the memory is configured to store a computer program executable on a processor; and
the processor is configured to perform the method of any one of claims 11 to 24 in conjunction with the transceiver when executing the computer program.

**38.** A second communication node, comprising: a processor, a memory and a transceiver;
the memory is configured to store a computer program executable on a processor; and
the processor is configured to perform the method of any one of claims 25 to 33 in conjunction with the transceiver when executing the computer program.

**40.** A computer storage medium storing one or more programs that, when executed by one or more processors, perform the method of any one of claims 1 to 10 or any one of claims 11 to 24 or any one of claims 25 to 33.

**41.** A chip, comprise a processor, configured to call a computer program from a memory and run the computer program to perform the method of any one of claims 1 to 10 or any one of claims 11 to 24 or any one of claims 25 to 33.

**42.** A computer program product, comprising a computer storage medium storing a computer program, wherein the computer program comprises instructions executable by at least one processor that, when executed by the at least one processor, perform the method of any one of claims 1 to 10 or any one of claims 11 to 24 or any one of claims 25 to 33.

**43.** A computer program causing a computer to perform the method of any one of claims 1 to 10 or any one of claims 11 to 24 or any one of claims 25 to 33.
